# EUROPEAN PATENT SPECIFICATION

(11) **EP 2 896 830 B1**
(45) Date of publication and mention of the grant of the patent: **20.07.2016**
(21) Application number: 14198554.9
(22) Date of filing: 17.12.2014
(51) Int. Cl.: F04B 1/04, F04B 1/06, F04B 7/00, F04B 17/02, F04B 49/22, F04B 53/10, F03C 1/34, F15B 13/043, F03D 9/00

(54) **HYDRAULIC MACHINE AND POWER GENERATING APPARATUS**
Hydraulikmaschine und Energieerzeugungsvorrichtung
Machine hydraulique et appareil de génération de puissance

(30) Priority: 18.12.2013 JP 2013261791
(43) Date of publication of application: 22.07.2015
(73) Proprietor: MITSUBISHI HEAVY INDUSTRIES, LTD., Tokyo 108-8215 (JP)
(72) Inventor: Tsutsumi, Kazuhisa, TOKYO, 108-8215 (JP); Mine, Takumi, TOKYO, 108-8215 (JP); Caldwell, Niall, MIDLOTHIAN, LOTHIAN, EH209TB (GB); Laird, Stephen, MIDLOTHIAN, LOTHIAN, EH209TB (GB); Muenz, Erik, MIDLOTHIAN, LOTHIAN, EH209TB (GB)
(74) Representative: Intès, Didier Gérard André

(56) References cited:
- WO-A2-2011/104547
- US-A1- 2009 317 266
- US-A1- 2011 268 590
- US-A1- 2013 221 676

## Description

### Technical Field

The present disclosure relates to a hydraulic machine and a power generating apparatus.

### Background Art

From the perspective of preserving the global environment, power generating apparatuses which utilize renewable energy have become popular in recent years. In a wind turbine generator utilizing wind energy in one form of renewable energy, a wind power received by the blade is converted into torque of a rotation shaft, and this torque is transmitted to a generator by a power transmission mechanism to be converted to electric power. As one example of the power transmission mechanism, there is a hydraulic transmission using a hydraulic machine such as a hydraulic pump and at least a hydraulic motor.

Some hydraulic machines are provided with a valve for switching a state of communication between a hydraulic chamber formed by a piston and a cylinder and an outside of the hydraulic chamber.

Patent Document 1 discloses, as a method for suppressing occurrence of opening-closing abnormalities in a valve of a fluid working machine (a hydraulic machine), to control an opening-closing timing of the valve in accordance with a state of working fluid (operating oil) or characteristics of component parts of the fluid working machine.

### Citation List

### Patent Literature

[Patent Document 1] WO 2011/104547
[Patent Document 2] US 2011/268590 A1
[Patent Document 3] US 2013/221676 A1Summary

### Technical Problem

Patent Literature 1 describes the method for suppressing occurrence of opening-closing abnormalities in the valve which switches the state of communication between the hydraulic chamber and the outside of the hydraulic chamber. However, there is no disclosure regarding how to determine the state of the valve or how to improve the state of the valve when the opening-closing abnormalities occur in the valve.
Similarly, Patent Literature 2 and 3 describe fluid working machine such as pumps and motors comprising a controller and a working chamber of cyclically varying volume that aim to facilitate the opening of a low pressure valve.

An object of at least one embodiment of the present invention is to provide a hydraulic machine which makes it possible to specifically determine an operation state of a valve provided in the hydraulic machine. Further, another object of at least one embodiment of the present invention is to provide a power generating apparatus which makes it possible to specifically determine an operation state of a valve provided in the power generating apparatus.

### Solution to Problem

A hydraulic machine according to at least one embodiment of the present invention comprises:
a cylinder;
a piston slidably provided in the cylinder;
a first valve comprising: an actuator; and a movable unit including a valve element and configured to move with the valve element in accordance with operation of the actuator, the valve being configured to switch a state of communication between a hydraulic chamber formed by the cylinder and the piston and an outside of the hydraulic chamber by moving the movable unit; and
a controller for controlling the movable unit to a first position by operating the actuator, the first position being one of a valve open position and a valve closed position; and
a signal detector for detecting a signal which the actuator generates when the movable unit moves from the first position to a second position in a state where operation of the actuator is stopped, the second position being the other of the valve open position and the valve closed position,
characterized in that the controller is configured to, in a case where the signal is not detected by the signal detector when a phase angle of the piston indicating a position of the piston in each cycle of a reciprocating motion of the piston is in a first range including a target phase angle of the piston for moving the movable unit to the second position: execute a
   control mode for controlling the movable unit to be in the second position by maintaining the solenoid coil in the not energized state; and determine an operation state of the valve based on whether or not the signal is detected by the signal detector when the control mode is executed and the phase angle of the piston is in a second range which is at least a part of a range excluding the first range.

As for the above hydraulic machine, when the movable unit including the valve element is moved to the first position (one of the valve open position and the valve closed position) by operating the actuator, a part of drive energy applied to the actuator remains in the movable unit or the actuator as residual energy after the movable unit is moved. Further, the movable unit generates a signal due to the residual energy when the movable unit moves from the first position to a second position (the other of the valve open position and the valve closed position). Therefore, if the signal is not detected by the signal detector when the phase angle indicating the position of the piston is in the first range including the target phase angle for moving the movable unit to the second position, it is presumed that the valve is not operating normally. However, there are two possibilities, one that the movable unit has continued to be in the first position in the period corresponding to the first range and the other that the movable unit has continued to be in the second position in the period. Thus, it is impossible to determine which one of the possibilities the operation state of the valve corresponds to.

Therefore, the controller of the hydraulic machine is configured to, in the case where the signal is not detected by the signal detector when the phase angle is in the first range: execute a control mode for controlling the movable unit to the second position in a state where the operation of the actuator is stopped; and determine an operation state of the valve based on whether or not the signal is detected by the signal detector when the control mode is executed and the phase angle of the piston is in a second range which is at least in part a range excluding the first range. As a result, depending on whether the movable unit continues to be in the first position in the period corresponding to the first range or the movable unit continues to be in the second position in the period, subsequent detection results of presence of the signal when the control mode is executed and the phase angle of the piston is in a second range which is at least in part a range excluding the first range, are different. Therefore, by using this phenomenon, it is possible to specifically determine the operation state of the valve.

Further, the "actuator" of the valve includes at least a solenoid actuator, a piezo actuator and a magnetostrictive actuator.

Furthermore, the "operation state of the valve" refers to an operational state including a position of the movable unit including the valve element, a net force acting on the valve, a force of the actuator acting on the valve element, and an effect that the actuator has on the position of the movable unit including the valve element. The "net force" is a resultant force formed due to pressure difference across the valve element, and is a combined force of spring biasing forces acting on the valve element, and other forces. This net force determines the position of the valve unit including the valve element between the valve open position and the valve closed position.

A hydraulic machine according to at least one embodiment of the present invention comprises:
a cylinder;
a piston slidably provided in the cylinder;
a first electromagnetic valve comprising: a movable unit including a valve element and an armature; and a solenoid coil, the first electromagnetic valve being configured to switch a state of communication between a hydraulic chamber formed by the cylinder and the piston and an outside of the hydraulic chamber by moving the movable unit;
a controller for moving the movable unit to a first position by energizing the solenoid coil, the first position being one of a valve open position and a valve closed position; and
a electrical signal detector for detecting an electrical signal which the solenoid coil generates when the movable unit moves from the first position to a second position in a state where the solenoid coil is not energized, the second position being the other of the valve open position and the valve closed position,
wherein the controller is configured to, in a case where the electrical signal is not detected by the electrical signal detector when a phase angle indicating a position of the piston in each cycle of a reciprocating motion of the piston is in a first range including a target phase angle for moving the movable unit to the second position: execute a control mode for controlling the movable unit to the second position in a state where the solenoid coil is not energized; and determine an operation state of the first electromagnetic valve based on whether or not the electrical signal is detected by the electrical signal detector when the control mode is executed and the phase angle of the piston is in a second range which is at least in part a range excluding the first range.

The solenoid coil of the first electromagnetic valve in the hydraulic machine is configured to generate an electrical signal due to residual magnetism of the armature when the movable unit moves from the first position (one of the valve open position and the valve closed position) to the second position (the other of the valve open position and the valve closed position). Therefore, if the electrical signal is not detected by the electrical signal detector when the phase angle indicating the position of the piston is in the first range including the target phase angle for moving the movable unit to the second position, it is presumed that the first electromagnetic valve is not operating normally. However, there are two possibilities, one that the movable unit has continued to be in the first position in the period corresponding to the first range and the other that the movable unit has continued to be in the second position in the period. Thus, it is impossible to determine which one of the possibilities the operation state of the first electromagnetic valve corresponds to.

In view of this, the controller in the hydraulic machine is configured to, in the case where the electrical signal is not detected by the electrical signal detector when the phase angle indicating the position of the piston is in the first range: execute a control mode for controlling the movable unit to the second position in a state where the solenoid coil is not energized; and determine an operation state of the first electromagnetic valve based on whether or not the electrical signal is detected by the electrical signal detector when the control mode is executed and the phase angle of the piston is in a second range which is at least in part a range excluding the first range.

As a result, depending on whether the movable unit continues to be in the first position in the period corresponding to the first range or the movable unit continues to be in the second position in the period, subsequent detection results of whether or not the electrical signal is present when the control mode is executed and the phase angle of the piston is in a second range which is at least in part a range excluding the first range, are different. Therefore, by using this phenomenon, it is possible to specifically determine the operation state of the first electromagnetic valve.

In the hydraulic machine according to some embodiments, the controller is configured to:
determine occurrence of a first event in a case where the electrical signal is detected when the control mode is executed and the phase angle of the piston is in a second range which is at least in part a range excluding the first range, the first event indicating that the movable unit has continued to be in the first position in a period corresponding to the first range; and
determine occurrence of a second event in a case where the electrical signal is not detected when the control mode is executed and the phase angle of the piston is in a second range which is at least in part a range excluding the first range, the second event indicating that the movable unit has continued to be in the second position in the period corresponding to the first range.
As a result, it is possible to distinguish the first event indicating that the movable unit has continued to be in the first position in the period corresponding to the first range and the second event indicating that the movable unit has continued to be in the second position in the period.

In the hydraulic machine according to some embodiments, the controller is configured to, in a case where occurrence of the second event is determined, advance a transmission timing of transmitting a control signal for moving the movable unit from the second position to the first position in the reciprocating motion of the piston.

The delay of the timing of moving the movable unit from the second position to the first position in the reciprocating motion of the piston can result in occurrence of the second event in which the movable unit continues to be in the second position in the period corresponding to the first range. Thus, if it is determined that the second event has occurred, the timing of moving the movable unit from the second position to the first position is advanced so as to control the first electromagnetic valve favorably and achieve the excellent operation state of the hydraulic machine.

The hydraulic machine according to some embodiments further comprises:
a second electromagnetic valve configured to switch a state of communication between the hydraulic chamber and the outside of the hydraulic chamber, and
the controller is configured to, in a case where occurrence of the first event is determined, advance a transmission timing of transmitting a control signal that is supplied to the second electromagnetic valve just before to a timing corresponding to the target phase angle so as to switch an open/close state of the second electromagnetic valve.

The delay of the transmission timing of transmitting the control signal that is supplied to the second electromagnetic valve just before the timing corresponding to the target phase angle can result in occurrence of the first event in which the movable unit continues to be in the first position in the period corresponding to the first range. Thus, if it is determined that the first event has occurred, the transmission timing of transmitting the control signal to the second electromagnetic valve just before the period corresponding to the first range is advanced so as to control the first electromagnetic valve and the second electromagnetic valve favorably and achieve the excellent operation state of the hydraulic machine.

The hydraulic machine according to some embodiments further comprises:
a high pressure valve configured to switch a state of communication between the hydraulic chamber and a high pressure line provided outside the hydraulic chamber; and
a temperature indicator detector for detecting a temperature of operating oil to be introduced to the hydraulic chamber, and
the first electromagnetic valve includes a low pressure valve which is configured to switch a state of communication between the hydraulic chamber and a low pressure line provided outside the hydraulic chamber,
wherein the first position is the valve closed position and the second position is the valve open position, and
wherein the controller is configured to, in a case where the temperature of the operating oil detected by the temperature indicator is below a reference temperature, advance a transmission timing of transmitting a control signal for moving the movable unit from the valve open position to the valve closed position in a reciprocating motion of the piston to a timing earlier than a case where the temperature of the operating oil detected by the temperature indicator exceeds the reference temperature.

The movable unit of the low pressure valve serving as the first electromagnetic valve is normally controlled to the valve closed position serving as the first position in the state where the solenoid coil is energized, and to the valve open position serving as the second position in the state where the solenoid coil is not energized. Specifically, the first electromagnetic valve here is a normally-open low pressure valve.

In this hydraulic machine, the lower the temperature of the operating oil introduced to the hydraulic chamber is, the higher the viscosity of the operating oil becomes. Due to high viscous resistance of the operating oil, it takes longer to move the movable unit from the valve open position to the valve closed position.

Therefore, as described above, the controller is configured to, in a case where the temperature of the operating oil detected by the temperature indicator is below the reference temperature, advance the transmission timing of transmitting the control signal for moving the movable unit from the valve open position to the valve closed position in the reciprocating motion of the piston to a timing earlier than the case where the temperature of the operating oil indicated by the temperature indicator exceeds the reference temperature.

As a result, it is possible to suppress the delay of the timing of moving the movable unit from the valve open position to the valve closed position in the reciprocating motion of the piston, which occurs due to the operating oil temperature, and also control the high pressure valve and the low pressure valve favorably. Therefore, it is possible to achieve an excellent operation state of the hydraulic machine.

In the hydraulic machine according to some embodiments, the controller is configured to, in the case where the temperature of the operating oil indicated by the temperature indicator is below the reference temperature, advance a transmission timing of transmitting a control signal that is supplied to the high pressure valve prior to the timing corresponding to the target phase angle so as to switch an open/close state of the high pressure valve, to a timing earlier than the case where the temperature of the operating oil indicated by the temperature indicator exceeds the reference temperature.

The lower the temperature of the operating oil introduced to the hydraulic chamber is, the higher the viscosity of the operating oil becomes. Due to high viscous resistance of the operating oil, it takes longer to operate the high pressure valve.

In view of this, the controller is configured to, in the case where the temperature of the operating oil indicated by the temperature indicator is below the reference temperature, advance a transmission timing of transmitting a control signal that is supplied to the high pressure valve prior to the timing corresponding to the target phase angle so as to switch an open/close state of the high pressure valve, to a timing earlier than the case where the temperature of the operating oil indicated by the temperature indicator exceeds the reference temperature.

As a result, delay in movement of the high pressure valve by the operating oil temperature in the reciprocating motion of the piston can be suppressed, and the high pressure valve and the low pressure valve can be controlled favorably.

In the hydraulic machine according to some embodiments comprises:
a high pressure valve configured to switch a state of communication between the hydraulic chamber and a high pressure line provided outside the hydraulic chamber; and
a temperature indicator for detecting a temperature of operating oil to be introduced to the hydraulic chamber, and
the first electromagnetic valve includes a low pressure valve which is configured to switch a state of communication between the hydraulic chamber and a low pressure line provided outside the hydraulic chamber,
the first position is the valve closed position and the second position is the valve open position, and
the controller is configured to, in a case where the temperature of the operating oil indicated by the temperature indicator is below a reference temperature, control the low pressure valve so as to increase an electric current that is applied to the solenoid coil to move the movable unit from the valve open position to the valve closed position compared to a case where the temperature of the operating oil indicated by the temperature indicator exceeds the reference temperature.

In this hydraulic machine, the lower the temperature of the operating oil introduced to the hydraulic chamber is, the higher the viscosity of the operating oil becomes. Due to high viscous resistance of the operating oil, it is difficult to smoothly move the movable unit from the valve open position to the valve closed position.

In view of this, as described above, the controller is configured to, in a case where the temperature of the operating oil indicated by the temperature indicator is below a reference temperature, control the low pressure valve so as to increase an electric current that is applied to the solenoid coil to move the movable unit from the valve open position to the valve closed position compared to a case where the temperature of the operating oil indicated by the temperature indicator exceeds the reference temperature.

As a result, it is possible to smoothly move the movable unit from the valve open position to the valve closed position in the reciprocating motion of the piston even in the case where the temperature indicated by the temperature indicator is lower than the reference temperature, so that the high pressure valve and the low pressure valve can be controlled favorably. Therefore, it is possible to achieve an excellent operation state of the hydraulic machine.

The hydraulic machine according to some embodiments comprises:
a high pressure valve configured to switch a state of communication between the hydraulic chamber and a high pressure line provided outside the hydraulic chamber; and
the first electromagnetic valve includes a low pressure valve which is configured to switch a state of communication between the hydraulic chamber and a low pressure line provided outside the hydraulic chamber, the first position is the valve closed position and the second position is the valve open position, and
the controller is configured to, in a case where a rotation speed of the hydraulic machine is lower than a reference rotation speed, control the low pressure valve so as to increase an electric current that is applied to the solenoid coil to move the movable unit from the valve open position to the valve closed position compared to a case where the rotation speed of the hydraulic machine exceeds the reference rotation speed.

The movable unit of the low pressure valve serving as the first electromagnetic valve is normally controlled to the valve closed position serving as the first position in the state where the solenoid coil is energized, and to the valve open position serving as the second position in the state where the solenoid coil is not energized. Specifically, the first electromagnetic valve here is a normally-open low pressure valve.

In this hydraulic machine, when the rotation speed of the hydraulic machine is relatively low, the temperature of the operating oil which is introduced to the hydraulic chamber does not sufficiently increase, and the viscosity of the operating oil is high. Thus, the operating oil is in the state that the viscous resistance is high.

In view of this, as described above, the controller is configured to, in the case where the rotation speed of the hydraulic machine is lower than the reference rotation speed, control the low pressure valve so as to increase the electric current that is applied to the solenoid coil to move the movable unit from the valve open position to the valve closed position compared to the case where the rotation speed of the hydraulic machine exceeds the reference rotation speed.

As a result, even in the case where the rotation speed of the hydraulic machine is lower than the reference rotation speed, it is possible to move the movable unit smoothly from the valve open position to the valve closed position in the reciprocating motion of the piston, so as to favorably control the high pressure valve and the low pressure valve. Therefore, it is possible to achieve an excellent operation state of the hydraulic machine.

The hydraulic machine according to some embodiments further comprises:
a high pressure valve configured to switch a state of communication between the hydraulic chamber and a high pressure line provided outside the hydraulic chamber; and
an auxiliary valve for supplying high pressure oil to the hydraulic machine when starting the hydraulic machine, and
the first electromagnetic valve includes a low pressure valve which is configured to switch a state of communication between the hydraulic chamber and a low pressure line provided outside the hydraulic chamber,
the first position is the valve closed position and the second position is the valve open position, and
the auxiliary valve has a cross-sectional passage area smaller than that of the high pressure valve, and
the controller is configured to, in a case where the hydraulic machine is started using the auxiliary valve, advance a transmission timing of transmitting a control signal for moving the movable unit from the valve open position to the valve closed position in the reciprocating motion of the piston compared to a case where the hydraulic machine is driven in a normal operation mode using the high pressure valve.

The movable unit of the low pressure valve serving as the first electromagnetic valve is normally controlled to the valve closed position serving as the first position in the state where the solenoid coil is energized, and to the valve open position serving as the second position in the state where the solenoid coil is not energized. Specifically, the first electromagnetic valve here is a normally-open low pressure valve.

The pressure difference between the hydraulic chamber and the high pressure line is large when starting the hydraulic machine, and thus, the auxiliary valve may be provided, which has a cross-sectional passage area smaller than that of the high pressure valve. Even in the case of using the auxiliary valve which is relatively easy to open and close when the pressure difference between the hydraulic chamber and the high pressure line is large, the pressure difference between the hydraulic chamber and the high pressure line has some effect on the opening and closing timing of the auxiliary valve. Therefore, with the configuration that the controller is configured to, in a case where the hydraulic machine is started using the auxiliary valve, advance a transmission timing of transmitting a control signal for moving the movable unit from the valve open position to the valve closed position in the reciprocating motion of the piston compared to a case where the hydraulic machine is driven in a normal operation mode using the high pressure valve, it is possible to adjust the pressure in the hydraulic chamber so as to open and close the auxiliary valve at an appropriate timing. Therefore, it is possible to start the hydraulic machine in a stable manner.

In the hydraulic machine according to some embodiments, the controller is configured to, in a case where the hydraulic machine fails to be driven in an operation mode for rotating a rotation shaft of the hydraulic machine in a first direction, start the hydraulic machine in an operation mode for rotating the rotation shaft in a second direction which is opposite to the first direction.

After keen examinations by the inventors of the present invention, it was discovered that, by starting the hydraulic machine in the operation mode for rotating the rotation shaft in the second direction which is opposite to the first direction when the hydraulic machine could not be started in the operation mode for rotating the rotation shaft of the hydraulic machine in the first direction, it was possible to operate the first electromagnetic valve normally and start the hydraulic machine.

As described above, the controller is configured to, in the case where the hydraulic machine fails to be driven in the operation mode for rotating the rotation shaft of the hydraulic machine in the first direction, start the hydraulic machine in the operation mode for rotating the rotation shaft in the second direction which is opposite to the first direction. Thus, the first electromagnetic valve, which could not be operated normally by rotating the rotation shaft of the hydraulic machine in the first direction, can be operated normally, and the hydraulic machine can be started to raise the operating oil temperature.

The hydraulic machine according to some embodiments further comprises:
a high pressure valve configured to switch a state of communication between the hydraulic chamber and a high pressure line provided outside the hydraulic chamber;
an auxiliary valve for supplying high pressure oil to the hydraulic machine when starting the hydraulic machine; and
the auxiliary valve has a cross-sectional passage area smaller than that of the high pressure valve, and
the first electromagnetic valve includes a low pressure valve which is configured to switch a state of communication between the hydraulic chamber and a low pressure line provided outside the hydraulic chamber,
the controller is configured to control the auxiliary valve and the low pressure valve so that the rotation shaft of the hydraulic machine rotates in the second direction.

As described above, when the hydraulic machine does not start in the operation mode for rotating the rotation shaft of the hydraulic machine in the first direction, the rotation shaft of the hydraulic machine is rotated in the second direction by controlling the auxiliary valve and the low pressure valve. As a result, it is possible to start the hydraulic machine and raise the temperature of the operating oil without providing additional member.

In a power generating apparatus for generating electric power from renewable energy according to some embodiments, the power generating apparatus comprises:
a main shaft configured to rotate using the renewable energy;
a hydraulic pump configured to be driven by rotation of the main shaft;
a hydraulic motor configured to be driven by pressurized oil generated by the hydraulic pump; and
a generator configured to be driven by the hydraulic motor.

The hydraulic motor or the hydraulic pump comprises: a cylinder; a piston slidably provided in the cylinder; a electromagnetic valve comprising: a movable unit including a valve element and an armature; and a solenoid coil, the electromagnetic valve being configured to switch a state of communication between a hydraulic chamber formed by the cylinder and the piston and an outside of the hydraulic chamber by moving the movable unit; a controller for moving the movable unit to a first position by energizing the solenoid coil, the first position being one of a valve open position and a valve closed position; and an electrical signal detector for detecting an electrical signal which the solenoid coil generates when the movable unit moves from the first position to a second position in a state where the solenoid coil is not energized, the second position being the other of the valve open position and the valve closed position.

The controller is configured to, in a case where the electrical signal is not detected by the electrical signal detector when a phase angle indicating a position of the piston in each cycle of a reciprocating motion of the piston is in a first range including a target phase angle for moving the movable unit to the second position: execute a control mode for controlling the movable unit to the second position in a state where the solenoid coil is not energized and determine an operation state of the electromagnetic valve based on whether or not the electrical signal is detected by the electrical signal detector when the control mode is executed and the phase angle of the piston is in a second range which is at least in part a range excluding the first range.

The solenoid coil of the electromagnetic valve in the hydraulic machine is configured to generate an electrical signal due to residual magnetism of the armature when the movable unit moves from the first position (one of the valve open position and the valve closed position) to the second position (the other of the valve open position and the valve closed position). Therefore, if the electrical signal is not detected by the electrical signal detector when the phase angle indicating the position of the piston is in the first range including the target phase angle for moving the movable unit to the second position, it is presumed that the electromagnetic valve is not operating normally. However, there are two possibilities, one that the movable unit has continued to be in the first position in the period corresponding to the first range and the other that the movable unit has continued to be in the second position in the period. Thus, it is impossible to determine which one of the possibilities the operation state of the electromagnetic valve corresponds to.

In view of this, the controller is configured to, in the case where the electrical signal is not detected by the electrical signal detector when the phase angle indicating the position of the piston is in the first range: execute a control mode for controlling the movable unit to a second position in a state where the solenoid coil is not energized ; and determine an operation state of the electromagnetic valve based on whether or not the electrical signal is detected by the electrical signal detector when the control mode is executed and the phase angle of the piston is in a second range which is at least in part a range excluding the first range.

As a result, depending on whether the movable unit continues to be in the first position in the period corresponding to the first range or the movable unit continues to be in the second position in the period, subsequent detection results of the electrical signal during execution of the control mode are different. Therefore, by using this phenomenon, it is possible to specifically determine the operation state of the electromagnetic valve.

The power generating apparatus according to some embodiments further comprises:
a high pressure line for connecting an outlet of the hydraulic pump and an inlet of the hydraulic motor;
a low pressure line for connecting an inlet of the hydraulic pump and an outlet of the hydraulic motor;
a bypass line for connecting a point on the high pressure line and a point on the low pressure line; and
a relief valve provided on the bypass line, and
the controller is configured to execute an oil temperature raising mode for stopping the hydraulic motor while operating the hydraulic pump so that operating oil flows from the high pressure oil line to the low pressure line via the relief valve.

By executing the oil temperature raising mode while letting the hydraulic pump continue to operate so that the operating oil flows into the low pressure line from the high pressure line via the relief valve, a part of pressure energy of the operating oil passes through the relief valve 82 and is converted into heat energy, thereby raising the temperature of the operating oil. Therefore, by executing the oil temperature raising mode, it is possible to improve unstable movement of the electromagnetic valve which is caused by the low temperature of the operating oil, and it is possible to successfully operate the hydraulic motor or the hydraulic pump which includes the electromagnetic valve. As a result, the power generation efficiency of the power generating apparatus can be improved.

The power generating apparatus according to some embodiments further comprises:
a temperature indicator for detecting a temperature of operating oil to be introduced to the hydraulic chamber, and
the controller is configured to, in a case where a load of the hydraulic transmission including the hydraulic pump and the hydraulic motor is not less than a threshold value and the temperature of the operating oil indicated by the temperature indicator is below a reference temperature, reduce a target flow rate of the hydraulic pump which is determined in accordance with an operation state of the power generating apparatus compared to a case where the temperature of the operating oil indicated by the temperature indicator exceeds the reference temperature.

In such a state that the load of the hydraulic transmission is rather high, if the operating oil temperature is low, the flow rate of the hydraulic pump becomes greater than the flow rate of the hydraulic motor, which causes imbalance between these two flow rates. Thus, even when the load of the hydraulic transmission is equal to or higher than the threshold value and the temperature indicated by the temperature indicator is lower than the reference temperature, the target flow rate of the hydraulic pump which is determined in accordance with the operation state of the power generating apparatus is lowered compared to the case where the temperature indicated by the temperature indictor is higher than the reference temperature, so as to operate the hydraulic transmission in a stable manner.

In the power generating apparatus according to some embodiments, the power generating apparatus is a wind turbine generator which is configured to generate electric power from wind in a form of renewable energy.

In this wind turbine generator, it is possible to specifically determine the operation state of the electromagnetic valve.

### Effects

According to at least one embodiment of the present invention, it is possible to specifically determine the operation state of a valve provided in the hydraulic machine.

### BRIEF DESCRIPTION OF DRAWINGS

[FIG.1]

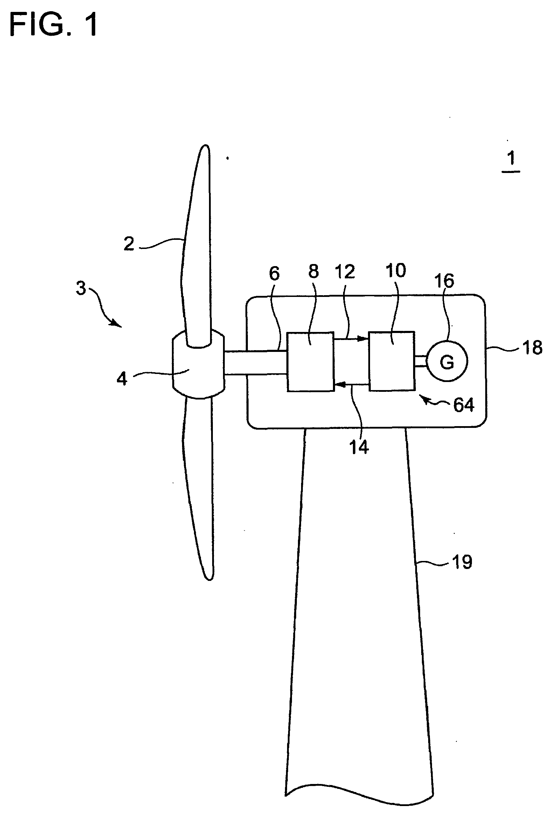

   FIG.1 is an illustration of a wind turbine generator according to an embodiment.
[FIG.2]

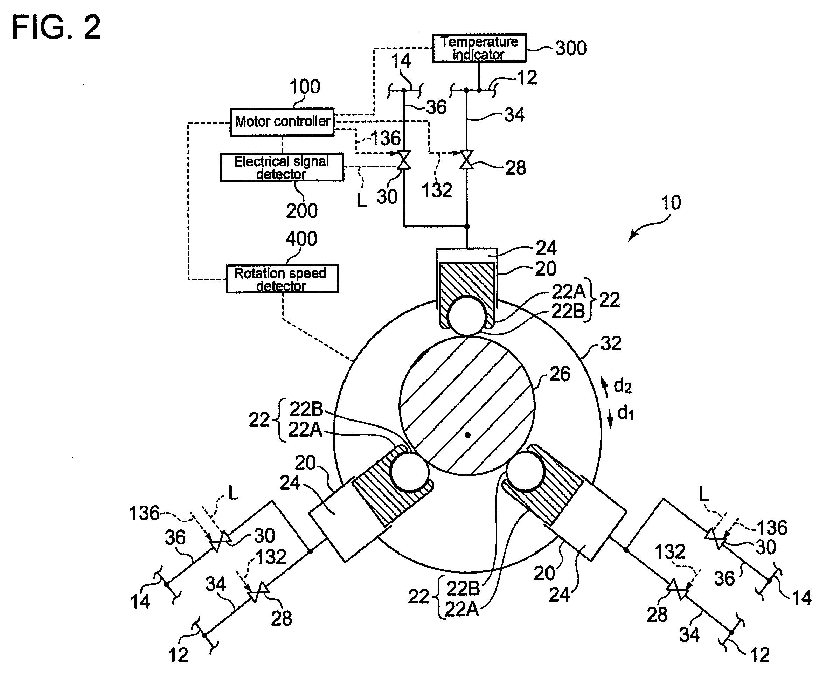

   FIG.2 is a schematic view showing a configuration of a hydraulic motor.
[FIG.3]

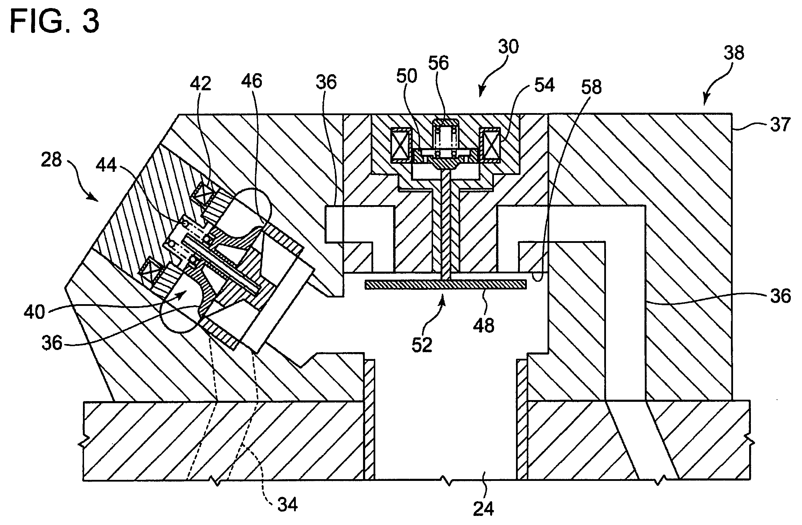

   FIG.3 is a schematic cross-sectional view showing configurations of a high pressure valve and a low pressure valve.
[FIG.4]

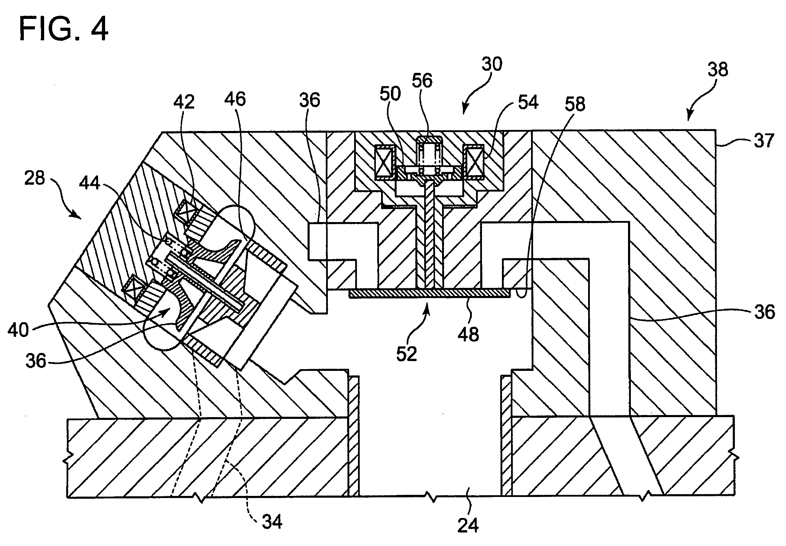

   FIG.4 is a schematic cross-sectional view showing configurations of a high pressure valve and a low pressure valve.
[FIG.5]

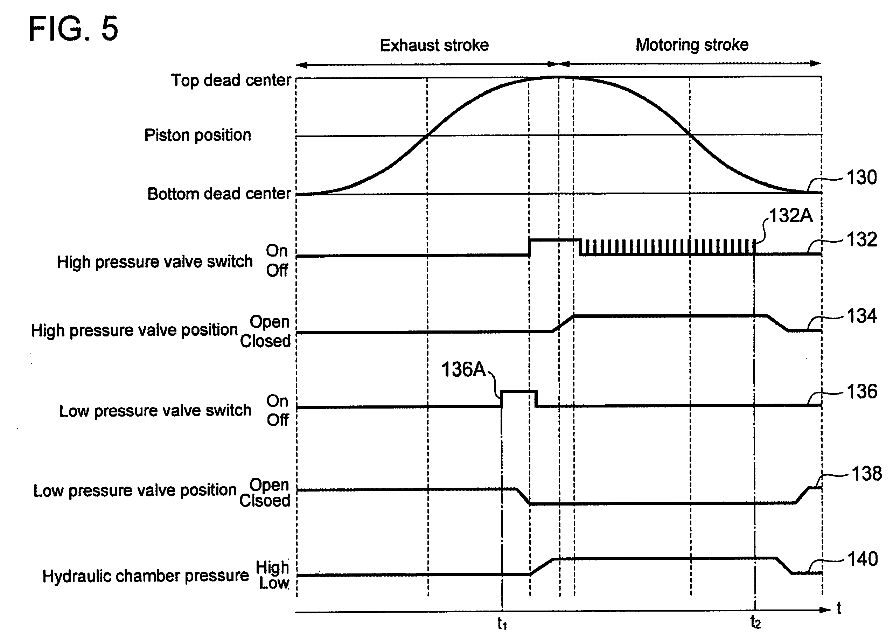

   FIG.5 is a diagram illustrating an opening and closing control of the high pressure valve and the low pressure valve.
[FIG.6]

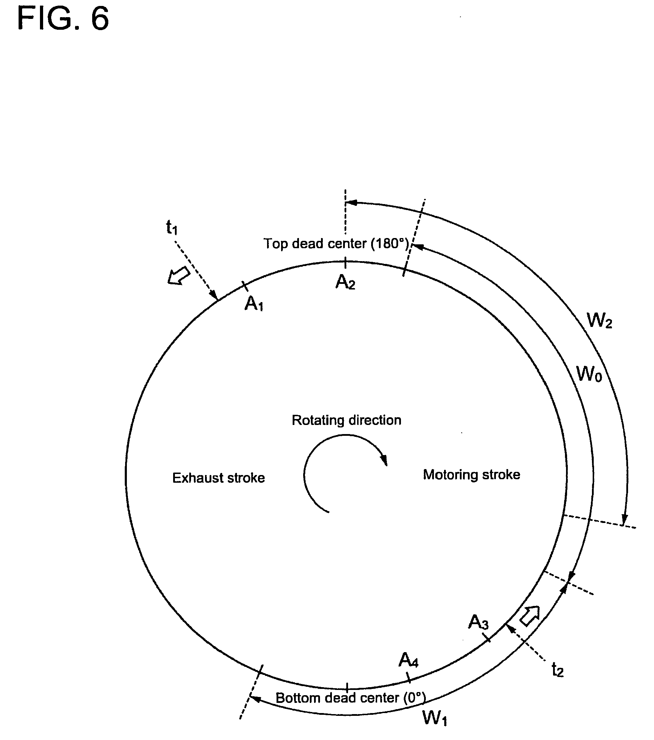

   FIG.6 is a diagram illustrating opening and closing timings of the high pressure valve and the low pressure valve with respect to phase angles.
[FIG.7]

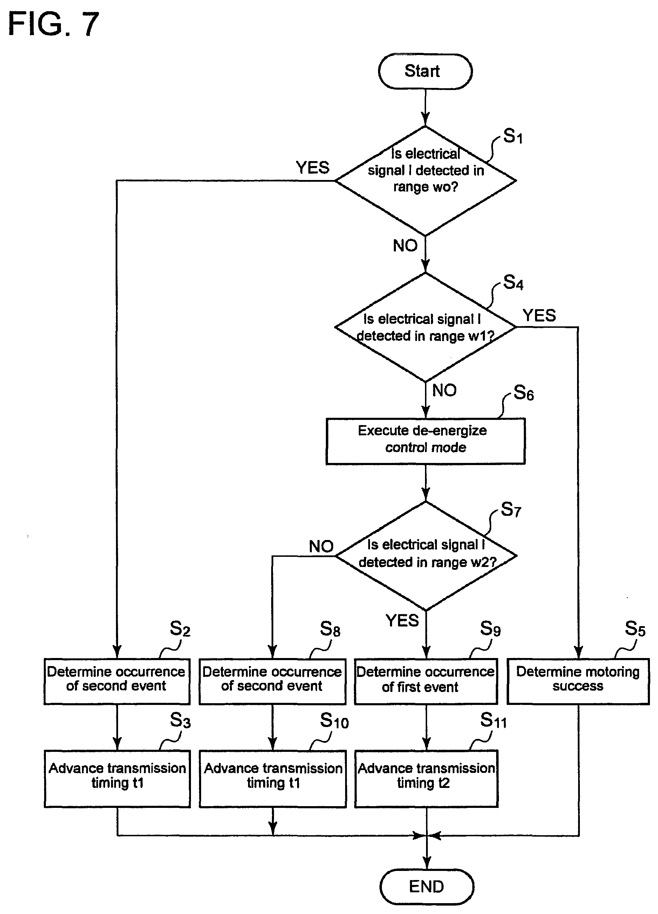

   FIG.7 is a flow chart for determining and improving operation states of the high pressure valve and the low pressure valve.
[FIG.8A]

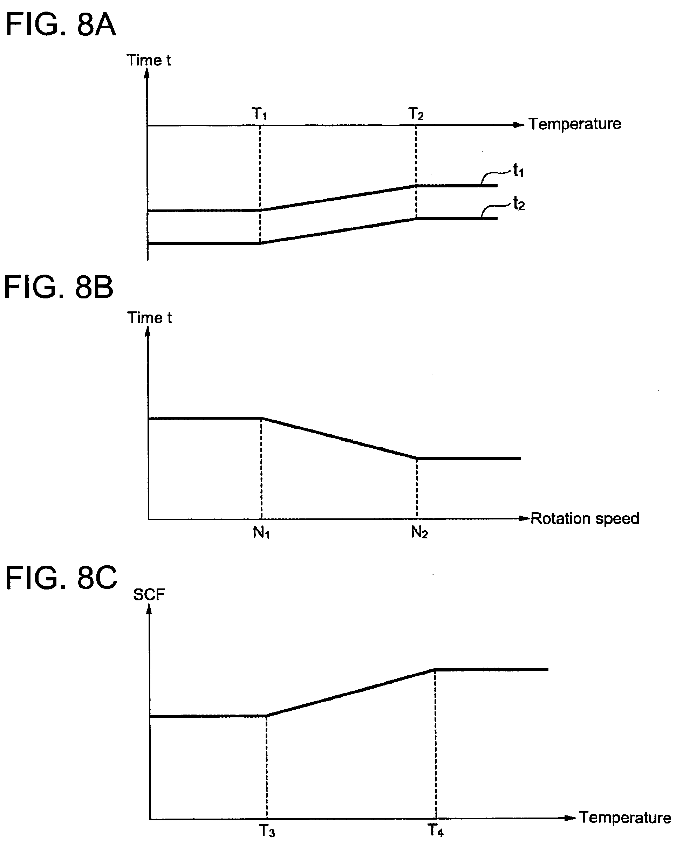

   FIG.8A is a graph showing a relationship between an operating oil temperature and transmission timings t₁ and t₂.
[FIG.8B]
   FIG.8B is a graph showing a relationship between a rotation speed of the hydraulic motor and electric current applied to a solenoid.
[FIG.8C]
   FIG.8C is a graph showing a relationship between the operating oil temperature and a scale factor of a target flow rate.
[FIG.9]

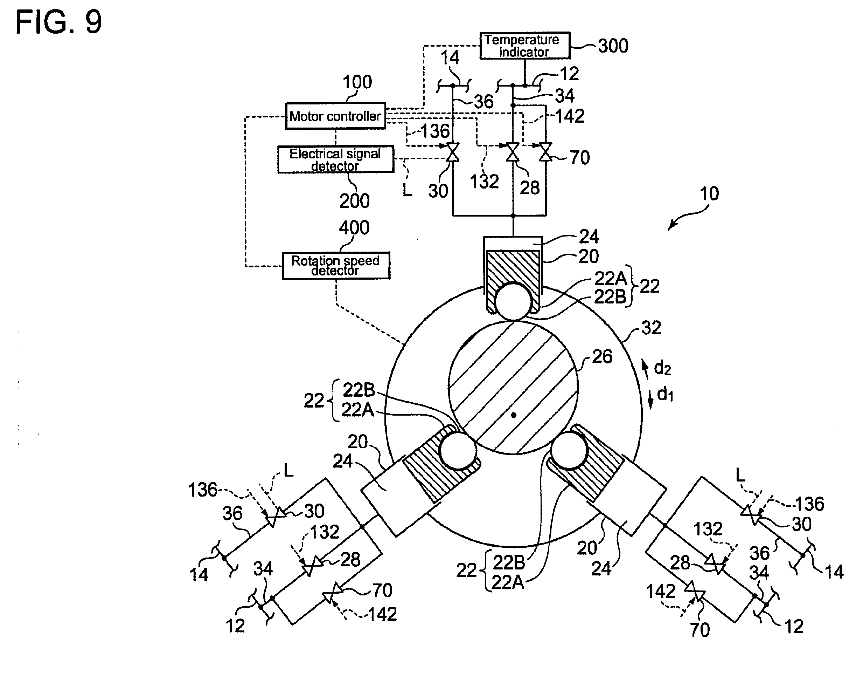

   FIG.9 is a schematic view showing the configuration of the hydraulic motor.
[FIG. 10]

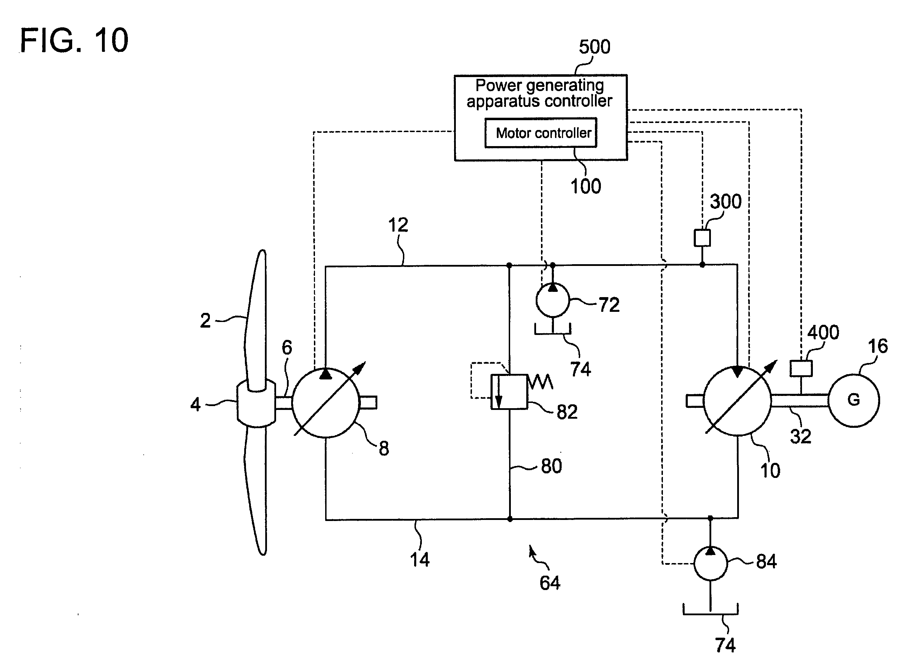

   FIG.10 is a diagram showing a configuration example of the wind turbine generator.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following embodiments, a power generating apparatus and a hydraulic machine according to one embodiment of the present invention are explained using as an example a wind turbine generator which generates electric power from wind energy in a form of renewable energy and at least one hydraulic motor used in the wind turbine generator. The power generating apparatus may include other types of renewable energy power generating apparatuses such as a tidal current power generating apparatus, an ocean current power generating apparatus and a river current power generating apparatus. Further, the hydraulic machine is not particularly limited to the at least one hydraulic motor and is applicable to at least one hydraulic pump.

### Wind Power Generator Configuration

FIG.1 is an illustration of a wind turbine generator according to an embodiment. As illustrated in the drawing, a wind turbine generator 1 is provided with a rotor 3 which is composed of at least one blade 2 and a hub 4.

In one embodiment, a hydraulic pump 8 is coupled to the rotor 3 via a rotation shaft 6. To the hydraulic pump 8, a hydraulic motor 10 is connected via a high pressure oil line 12 and a low pressure oil line 14. More specifically, an outlet of the hydraulic pump 8 is connected to an inlet of the hydraulic motor 10 via the high pressure oil line 12 while an inlet of the hydraulic pump 8 is connected to an outlet of the hydraulic motor 10 via the low pressure oil line 14. The hydraulic pump 8 is driven by the rotation shaft 6 to pressurize operating oil, thereby generating high pressure operating oil (pressurized oil). The pressurized oil generated by the hydraulic pump 8 is supplied to the hydraulic motor 10 via the high pressure oil line 12 to drive the hydraulic motor 10. The operating oil having performed work in the hydraulic motor 10 becomes low pressure operating oil. The low pressure operating oil is returned to the hydraulic pump 8 via the low pressure oil line 14 provided between the outlet of the hydraulic motor 10 and the inlet of the hydraulic pump 8.

A generator 16 is connected to the hydraulic motor 10. In one embodiment, the generator 16 is a synchronous generator which is connected to a grid and configured to be driven by the hydraulic motor 10.

Further, the rotation shaft 6 is at least in part covered by a nacelle 18 installed on a tower 19. In one embodiment, the hydraulic pump 8, the hydraulic motor 10 and the generator 16 are placed in the nacelle 18.

In the wind turbine generator 1 illustrated in FIG.1, the rotation energy of the rotor 3 is inputted to the generator 16 via a hydraulic transmission 64 including the hydraulic pump 8 and the hydraulic pump 10, so as to generate electric power by the generator 16.

FIG.2 is a schematic view showing a configuration of the hydraulic motor 10.

As illustrated in FIG.2, the hydraulic motor 10 includes a plurality of hydraulic chambers 24 formed by cylinders 20 and pistons 22, a cam 26 having a cam profile contacting the pistons 22, a high pressure valve 28 (a second electromagnetic valve) and a low pressure valve 30 (a first electromagnetic valve) that are provided for each of the hydraulic chambers 24, a high pressure communication line 34, a low pressure communication line 36, a motor controller 100 (a hydraulic machine controller) and an electrical signal detector 200.

From the perspective of smooth conversion of a reciprocating motion of the piston 22 into a rotational motion of the cam 26, the piston 22 preferably comprises a piston body 22A which slides in the cylinder 20, and a piston roller or a piston shoe which is attached to the piston body 22A and contacts the cam profile of the cam 26. FIG.2 illustrates the example in which the piston 22 comprises the piston body 22A and the piston roller 22B.

The cam 26 is an eccentric cam which is provided eccentrically with respect to an axial center O of the rotation shaft 32 (a crankshaft) of the hydraulic motor 10 which is connected to the generator 16. The cam 26 and the rotation shaft 32 to which the cam 26 is attached are configured to make one rotation for every up-and-down motion of the piston 22.

In another embodiment, the cam 26 is an annular multi-lobe cam (a ring cam) having a plurality of lobes (projections). In this case, the cam 26 and the rotation shaft 32 to which the cam 26 is attached are configured so that the piston 22 makes the same number of up-down-motions as the number of lobes.

The high pressure valve 28 is provided in the high pressure communication line 34 between the hydraulic chamber 24 and the high pressure line 13 provided outside the hydraulic chamber 24. The high pressure valve 28 is configured to switch the state of communication between the hydraulic chamber 24 and the high pressure line 12. The low pressure valve 30 is provided in the low pressure communication line 36 between the hydraulic chamber 24 and the low pressure line 14 provided outside the hydraulic chamber 24. The low pressure valve 30 is configured to switch the state of communication between the hydraulic chamber 24 and the low pressure line 14.

The motor controller 100 is configured to control opening and closing operation of the high pressure valve 28 by supplying a HPV control signal 132 to the high pressure valve 28, and control opening and closing operation of the low pressure valve 30 by supplying a LPV control signal 136 to the low pressure valve 30. In some embodiments, the motor controller 100 is configured as a part of a power generating apparatus controller 500 which governs operation control of the hydraulic motor 10. The motor controller 100 is described later.

The electrical signal detector 200 is configured to detect, from the low pressure valve 30, an electrical signal L for determining the operation state of the low pressure valve 30.

FIG.3 and FIG.4 are schematic cross-sectional views showing configurations of the high pressure valve 28 and the low pressure valve 30. FIG.3 is a view illustrating the state where the high pressure valve 28 is closed and the low pressure valve 30 is open. FIG.4 is a view illustrating the state where the high pressure valve 28 is open and the low pressure valve 30 is closed. In some embodiments, as illustrated in FIG.3 and FIG.4, the high pressure valve 28, the low pressure valve 30 and their casing 37 may be configured into a unit as a valve unit 38.

The high pressure valve 28 illustrated in FIG.3 and FIG.4 is provided with a movable unit 40 including a valve element 35, a solenoid coil 42 serving as an actuator for moving the movable unit 40 between the valve open position and the valve closed position, a spring 44 and a valve seat 46. The high pressure valve 28 is a normally-closed electromagnetic valve of poppet type. The valve seat 46 is provided on the hydraulic chamber 24 side with respect to the valve element 36. The high pressure valve 28 is configured to switch a state of communication between the hydraulic chamber 24 and the high pressure line 12 (see FIG.2) by moving the movable unit 40. The movable unit 40 is caused to move by an electromagnetic force of the solenoid coil 42 or a biasing force of the spring 44.

When the high pressure valve 28 is not energized by the HPV control signal 132 from the motor controller 100, the movable unit 40 is biased by the spring 44 toward the valve seat 46 to be held in a position where the hydraulic chamber 24 is not in communication with the high pressure oil line 12 (in the position of the movable 40 unit as illustrated in FIG.3). When the high pressure valve 28 is energized by the HPV control signal 132 from the motor controller 100, the movable unit 40 moves against the biasing force of the spring 44 by the electromagnetic force to a position where the hydraulic chamber 24 communicates with the high pressure oil line 12 (the position of the movable unit 40 as illustrated in FIG.4).

The low pressure valve 30 illustrated in FIG.3 and FIG.4 is provided with a movable unit 52 including a valve element 48 and an armature 50, a solenoid coil 54, a spring 56 and a valve seat 58. The low pressure valve 30 is a normally-open electromagnetic valve of poppet type. The valve element 48 is provided on the hydraulic chamber 24 side with respect to the valve seat 58. The low pressure valve 30 is configured to switch a state of communication between the hydraulic chamber 24 and the low pressure line 14 (see FIG.2) by moving the movable unit 52. The movable unit 52 is caused to move by an electromagnetic force of the solenoid 54 or a biasing force of the spring 56.

When the low pressure valve 30 is not energized by the LPV control signal 136 from the motor controller 100, the movable unit 52 is biased by the spring 56 to a direction of moving away from the valve seat 58 to be held in a valve open position where the hydraulic chamber 24 communicates with the low pressure oil line 14 (in the position of the movable unit 52 as illustrated in FIG.3). When the low pressure valve 30 is energized by the LPV control signal 136 from the motor controller 100, the armature 50 is attracted by the electromagnetic force of the solenoid 54, and the movable unit 52 moves toward the valve seat 58 by the electromagnetic force against the biasing force of the spring 56 so as to move to a valve closed position where the hydraulic chamber 24 is not in communication with the low pressure line 14 (the position of the movable unit 52 as illustrated in FIG.4). When the movable unit 52 moves from the valve closed position to the valve open position, the solenoid 54 generates an electrical signal L caused by residual magnetism of the armature 50 (a capsule or the valve element 58 forming a magnetic circuit in some cases). The electrical signal detector 200 illustrated in FIG.2 is configured to detect this electrical signal L. As the electrical signal detector 200, a sensor solely for detecting the electrical signal L may be provided, or a component for other purposes may be used for detecting the electrical signal L instead of providing a sensor solely for that purpose.

### (Opening and closing control of the high pressure valve and the low pressure valve during operation of the hydraulic motor)

FIG.5 is a diagram illustrating an opening and closing control of the high pressure valve 28 and the low pressure valve 30.

In FIG.5, a piston cycle curve 130 is a curve representing temporal changes of the position of the piston 22. The piston cycle curve 130 has time t on the horizontal axis. In this drawing, the HPV control signal 132 represents a control signal supplied to the high pressure valve 28, a high pressure valve position 134 represents an opening/closing state of the high pressure valve 28, the LPV control signal 136 represents a control signal supplied to the low pressure valve 30, a low pressure valve position 138 represents an opening/closing state of the low pressure valve 30, and a pressure curve 140 represents a pressure inside the hydraulic chamber 24.

In the hydraulic motor 10, as indicated by the piston cycle curve 130 of FIG.5, the piston 22 moves up and down periodically by a pressure difference between the low pressure oil line 14 and the high pressure oil line 12 created by the hydraulic pump 8 to repeat an exhaust stroke where the piston 22 moves from a bottom dead center toward a top dead center and a motoring stroke where the piston 22 moves from the top dead center toward the bottom dead center.

The HPV control signal 132 (see FIG.2 and FIG.5) is applied to the normally-closed high pressure valve 28. By energizing the high pressure valve 28 just before the piston 22 reaches the top dead center as indicated by the HPV control signal 132 of FIG.5, the high pressure valve 28 is opened as indicated by the high pressure valve position 134.

Once the high pressure valve 28 is opened, the high pressure oil flows into the hydraulic chamber 24 to rotate the cam 26. To latch the high pressure valve 28 in the open state, it only needs a small force which exceeds the biasing force of the spring 44 of the high pressure valve 28 (the force acting in the direction of closing the high pressure valve 28). Thus, after the piston 22 reaches the top dead center, the high pressure valve 28 is energized and de-energized repeatedly at high frequency to latch the high pressure valve 28 in the open state with small current. For instance, a cycle signal of 10kHz at a duty ratio of 20% may be used. In this case, from the perspective of reliably maintaining the high pressure valve 28 in the open state, a pulse-like control signal applied to the high pressure valve 28 is preferably higher frequency than the reciprocal of the time constant of the coil of the high pressure valve 28.

Further, a last pulse 132A of the high frequency signal for repeating energizing and de-energizing of the high pressure valve 28 can be considered as a control signal for switching the state of the high pressure valve 28 from the open state to the closed state.

Then, when supply of the pulse-like voltage signal (PWM signal) for energizing and de-energizing the high pressure valve 28 is stopped, the high pressure valve 28 is closed by the biasing force of the spring 44.

In contrast, as for the normally-open low pressure valve 30, the low pressure valve 30 is energized (closed) just before the piston 22 reaches the top dead center. Then, after the high pressure valve 28 is energized (opened), the low pressure valve 30 is held in the valve close state by pressure difference across the valve element 48 . As obvious from the low pressure valve position 138, the low pressure valve 30 is energized and closed just before the piston 22 reaches the top dead center.

Even if the low pressure valve 30, after being energized and closed, is deenergized before the piston 22 reaches the top dead center, the low pressure valve 30 is maintained closed by the pressure difference between the hydraulic chamber 24 and the low pressure line 14 as the pressure in the hydraulic chamber 24 is high (see the pressure curve 140) during the period when the piston 22 moves toward the top dead center (the period of the exhaust stroke after the low pressure valve 30 is closed). Then, after the piston 22 reaches the top dead center and the process transfers to the motor stroke, the high pressure oil flows into the hydraulic chamber 24 via the high pressure valve 28 and the pressure in the hydraulic chamber 24 is kept high and thus, the low pressure valve 30 remains in the closed state due to the pressure difference between the hydraulic chamber 24 and the low pressure oil line 14.

Next, when supply of the pulse-like voltage signal (PWM signal) to the high pressure valve 28 is stopped just before the piston 22 reaches the bottom dead center, the high pressure valve 28 is closed and the pressure in the hydraulic chamber 24 falls but the hydraulic chamber 24 continues to expand. As a result, the pressure difference between the hydraulic chamber 24 and the low pressure chamber passage 18 becomes small and hence, the low pressure valve 30 automatically opens.

After the piston 22 of the hydraulic motor 10 reaches the top dead center in the above manner, by repeating energizing and de-energizing of the high pressure valve 28 until just before the piston 22 reaches the bottom dead center, it is possible to maintain the high pressure valve 28 in the open state and reduce electric power supplied to energize the high pressure valve 28.

Further, after the low pressure valve 30 is energized just before the piston 22 of the hydraulic motor 10 reaches the top dead center, the low pressure valve 30 is deenergized. Beyond that point, the low pressure valve 30 is maintained closed by the pressure difference between the hydraulic chamber 24 and the low pressure oil line 14. As a result, it is possible to reduce electric power required to energize the low pressure valve 30.

FIG.6 is a diagram illustrating opening and closing timings of the high pressure valve 28 and the low pressure valve 30 with respect to phase angles which indicate the position of the piston 22 in each cycle of the reciprocating motion of the piston 22. The opening and closing timings of the high pressure valve 28 and the low pressure valve 30 are described above in reference to FIG.5. In FIG.6, the bottom dead center in the reciprocating motion of the piston 22 is 0° and the top dead center is 180° to describe the opening and closing timings of the high pressure valve 28 and the low pressure valve 30.

When the LPV control signal 136 is supplied to the low pressure valve 30 to change the low pressure valve 30 from the valve open position to the valve closed position at a phase angle A₁ just before the top dead center (the phase angle slightly smaller than 180°), the pressure in the cylinder 20 increases with the upward movement of the piston 22. At a phase angle A₂ near the top dead center (near 180°, the high pressure valve 28 is switched from the closed state to the open state due to pressure increase in the cylinder 20.

Then, when the HPV control signal 132 is supplied to the high pressure valve 28 to switch the high pressure valve 28 from the open state to the closed state at a phase angle A₃ before the bottom dead center, the pressure in the cylinder 20 decreases with the downward movement of the piston 22. At a phase angle A₄ just before the bottom dead center (the phase angle slightly smaller than 360° (0°)), the low pressure valve 30 is switched from the closed state to the open state due to pressure drop in the cylinder 20.

For the hydraulic motor 10 to operate properly, when the phase angle of the piston 22 is in a first range W₁ including a target phase angle (the phase angle A₄ in the example of FIG.6) for moving the movable unit 52 to the valve open position, the movable unit 52 must be moved from the valve closed position to the valve open position. However, in actuality, the following two problematic events possibly occur, i.e. a first event where the movable unit 52 continues to be in the valve closed position in a period corresponding to the first range W₁ and a second event where the movable unit 52 is already in the valve open position even before the period corresponding to the first range W₁ and continues to be in the valve open position even in the period corresponding to the first range W₁. The movable unit 52 may be in the valve open position when the solenoid coil 54 as the actuator is de-energized (in a non-operating state, i.e. a non-conducting state) in the state where the movable unit 52 is not under the influence of external forces (e.g. force due to flow or pressure imbalance across the valve member 48). Correspondingly, the energized solenoid coil 54 (the actuator in an operating state, i.e. a conducting state) would lead to valve closed position.

Conversely, the movable unit 52 may be in the open valve position when the solenoid coil 54 as the actuator is energized (in an operating state, i.e. a conducting state) in the state where the movable unit 52 is not under the influence of external forces (e.g. force due to flow or pressure imbalance across the valve member 48). Correspondingly, the de-energized solenoid coil 54 (the actuator in a non-operating state, i.e. a non-conducting state) would lead to valve closed position.

The first event in which the low pressure valve (the movable unit 52) is held in the valve close state near the bottom dead center, occurs typically when a transmission timing t₂ for the motor controller 100 to transmit the control signal 132A to the high pressure valve 28 is too late due to a timing failure of closing the high pressure valve 28. The control signal 132A is supplied to the high pressure valve 28 from the motor controller 100 prior to the timing corresponding to the target phase angle A₄. Occurrence of the first event depends on the transmission timing t₂. This is because, when the transmission timing t₂ is late, the timing A3 for switching the high pressure valve 28 from the open state to the closed state is delayed, the period when the piston 22 moves down toward the bottom dead center in the state where the high pressure valve 28 and the low pressure valve 30 are both closed becomes short, and the pressure in the cylinder 20 does not decline sufficiently before the piston 22 reaches the bottom dead center. Without sufficient pressure drop in the cylinder 20, the movable unit 52 of the low pressure valve 30 is unable to move from the valve closed position to the valve open position due to the pressure difference between the hydraulic chamber 24 and the outside of the hydraulic chamber 24. As a result, the first event occurs.

The second event which starts when the low pressure valve 30 (the movable unit 52) is in the valve open position just before the top dead center, occurs when a transmission timing t₁ for the transmitting the control signal 136A for moving the movable unit 52 of the low pressure valve 30 from the valve open position to the valve closed position is too late. This is because, when the transmission timing t₁ is late, the timing t₁ for switching the low pressure valve 30 from the open state to the closed state is delayed, the period when the piston 22 moves up toward the top dead center in the state where the high pressure valve 28 and the low pressure valve 30 are both closed becomes short, and the pressure in the cylinder 20 does not rise sufficiently before reaching the top dead center. Without sufficient pressure rise in the cylinder 20, the high pressure valve 28 is unable to be switched from the closed state to the open state by the pressure difference between the hydraulic chamber 24 and the outside of the hydraulic chamber 24. Then, the high pressure valve 28 and the low pressure valve 30 continue to be in the closed state even after the piston 22 reaches the top dead center, and immediately the pressure in the cylinder 20 starts to decline with to the downward movement of the piston 22. Therefore, the pressure difference drops across the valve element 48 of the low pressure valve 30 (the pressure difference between the hydraulic chamber 24 and the outside of the hydraulic chamber 24), and the movable unit 52 is unable to stay in the first position against a pressing force and the biasing force of the spring 56. Without being unable to stay in the valve closed position, the movable unit 52 of the low pressure valve 30 moves from the valve closed position to the valve open position before the period corresponding to the first range W₁. As a result, the second event occurs.

### (Method for determining and improving the operation state of the high pressure valve and the low pressure valve)

The motor controller of the hydraulic motor 10 is configured to determine and improve the operation state of the high pressure valve 28 and the low pressure valve 30 so as to favorably control the opening and closing operation of the high pressure valve 28 and the low pressure valve 30.

FIG.7 is a flow chart for determining and improving the operation states of the high pressure valve 28 and the low pressure valve 30.

First in S1, it is determined whether or not the electrical signal L is detected by the electrical signal detector 200 when the phase angle indicating the position of the piston 22 is within the range W₀ (see FIG.6). If it is determined in S1 that the electrical signal L is detected, it proves that the movable unit 52 is moved from the valve closed position to the valve open position prior to the period corresponding to the first range W₁. In this case, as the movable unit 52 has already been in the valve open position prior to the period corresponding to the first range W₁, the movable unit 52 is expected to remain in the valve open position even in the period corresponding to the first range W₁. Therefore, if the electrical signal L is detected in S1, it is determined in S2 that the second event occurs. When occurrence of the second event is determined in S2, the transmission timing t₁ for transmitting the control signal 136A for moving the movable unit 52 of the low pressure valve 30 from the valve open position to the valve closed position is advanced in the next cycle (S3) so that the second event does not occur in the next cycle of the reciprocating motion of the piston 22. To avoid occurrence of the second event in the next cycle, advancing of the transmission timing t₁ only in a cycle following the cycle where the occurrence of the second event is determined may be sufficient. However, the transmission timing t₁ may be advanced over a plurality of cycles after the cycle so as to obviate occurrence of the second event in the following cycles.

If it is determined that the electrical signal L is not detected in S1, it is determined whether or not the electrical signal L is detected within the first range W₁ including the target phase angle (S4). If the electrical signal L is detected in the first range W₁, it is determined that both the high pressure valve 28 and the low pressure valve 20 have operated normally (successfully motoring of the hydraulic motor 10) (S5). If the electrical signal L is not detected in S4, it is determined that the high pressure valve 28 and the low pressure valve 30 fail to operate normally (occurrence of either one of the first event or the second event), and a de-energize control mode is executed to specifically determine operation states of the high pressure valve 28 and the low pressure valve 30 (S6). In the de-energize control mode, the control signals (132, 136) are supplied to the high pressure valve 28 and the low pressure valve 30 from the motor controller 100 so as to reciprocate the piston 22 while maintaining the high pressure valve 28 and the low pressure valve 30 in the de-energized state until the phase angle of the piston 22 passes through a second range W₂. During execution of the de-energize control mode of S6, it is determined whether or not the electrical signal L is detected by the electrical signal detector 200 when the phase angle of the piston is within the second range W₂ (see FIG.6) (S7).

If the de-energize control mode is executed in such a state that the movable unit 52 of the low pressure valve 30 is in the valve closed position (in the energized position), while the phase angle of the piston moves through the second range W₂, the pressure difference between both sides of the valve element 48 of the low pressure valve 30 decreases with the movement of the piston 22 from the top dead center toward the bottom dead center, and the movable unit 52 is moved by the biasing force of the spring 56 from the valve closed position to the valve open position. During this movement of the piston 22, the electrical signal L is generated by the solenoid 54. In contrast, if the de-energize control mode is executed in such a state that the movable unit 52 of the low pressure valve 30 is in the valve open position (in the energized position), as the movable unit 52 is already in the valve open position before the period corresponding to the second range W₂, the electrical signal L is not generated at the solenoid 54 in the second range W₂.

Therefore, if the electrical signal L is not detected in S7, occurrence of the second event is determined (S8), in which the movable unit 52 is already in the valve open position even before the period corresponding to the first range W₁ and the movable unit 52 continues to be in the valve open position even in the period corresponding to the first range W₁. On the other hand, if the electrical signal L is detected in S7, occurrence of the first event is determined (S9), in which the movable unit 52 continues to be in the valve closed position in the period corresponding to the first range W₁.

If occurrence of the second event is determined in S8, similarly to S3, the transmission timing t₁ for transmitting the control signal 136A for moving the movable unit 52 of the low pressure valve 28 from the valve open position to the valve closed position is advanced in the next cycle (S10) so that the second event does not occur in the next cycle of the reciprocating motion of the piston 22. In order to avoid occurrence of the second event in the next cycle, it may be sufficient to advance the transmission timing t₁ only in a cycle following the cycle where the occurrence of the second event is determined. However, the transmission timing t₁ may be advanced over a plurality of cycles after the cycle so as to obviate occurrence of the second even in the following cycles.

Once the occurrence of the first event is determined in S9, to avoid occurrence of the first event in the next cycle of the reciprocating motion of the piston 22, the transmission timing t₂ of transmitting the control signal that is supplied to the high pressure valve 28 prior to a timing corresponding to the target phase angle A₄ is advanced in the next cycle (S11). For instance, in the case of the HPV control signal 132 illustrated in FIG.3, the transmission timing t₂ of transmitting the control signal (the last pulse 132A of the high frequency signal 132A) for switching the high pressure valve 28 from the open state to the closed state is advanced. In order to avoid occurrence of the first event in the next cycle, it may be sufficient to advance the transmission timing t₂ only in a cycle following the cycle where the occurrence of the first event is determined. This is, however, not restrictive, and the transmission timing t₂ may be advanced over a plurality of cycles after the cycle so as to obviate occurrence of the first even in the following cycles.

In the determination method, it is determined in S4 whether or not a failure occurs in the low pressure valve 30 using an electromotive force (the electrical signal) which is induced by the solenoid 54 when the movable unit 52 of the low pressure valve 30 returns to the valve open position from the valve closed position. However, if the electrical signal L is not detected in S4, occurrence of failures in the low pressure valve 30 can be determined but it is impossible to identify which one of the first event or the second event has occurred.

Thus, in S6, the piston 22 is reciprocated while maintaining the high pressure valve 28 and the low pressure valve 30 in the de-energized state until the phase angle of the piston passes through the second range W₂ so that the movable unit 52 of the low pressure valve 30 does not stay in the valve closed position in the second range W₂. More specifically, in the second range W₂, the movable unit 40, 50 of each of the high pressure valve 28 and the low pressure valve 30 which is in the de-energized state is biased toward the valve open position by the biasing force of the spring 44, 56. Further, the piston 22 is lowered from the top dead center toward the bottom dead center in the second range W₂ so as to cause pressure drop in the hydraulic chamber 24. By the pressure difference between both sides of the valve element 36, it is made easier to close the high pressure valve 28 having the valve seat 46 provided on the hydraulic chamber 24 side with respect to the valve element 36 (i.e. it is made difficult for the movable unit 40 of the high pressure valve 28 to remain in the valve closed position), and it is made easier to open the low pressure valve 30 having the valve seat 58 provided on a side opposite to the hydraulic chamber 24 with respect to the valve element 48 (i.e. it is made difficult for the movable unit 52 of the low pressure valve 30 to remain in the valve closed position).

As a result, if the movable unit 52 of the low pressure valve 30 is in the valve closed position (in the closed state) before the period corresponding to the second range W₂, the movable unit 52 moves from the valve closed position to the valve open position. In contrast, if the movable unit 52 of the low pressure valve 30 is in the valve open position (in the open state) before the period corresponding to the second range W₂, the movable unit 52 is maintained in the valve open position. Therefore, based on the detection result of existence/absence of the electrical signal L in the period corresponding to the second range W₂, it is possible to specifically determine the operation state of the high pressure valve 28 and the low pressure valve 30.

In view of the principle of the above determination method, the above determination method is not limited to those valve types that are described above (the high pressure valve 28 being a normally closed type, the low pressure valve 30 being a normally open type), and the above determination method may be applied to the case where each valve is configured to be other types. Similarly, the arrangement relation between the valve seat 46, 58 and the valve element 36, 48 of each valve with respect to the hydraulic chamber 24 is not particularly limited as long as the pressure difference can be created in a non-energizing control mode between both sides of the valve element 36, 48 to hinder the movable unit 40, 52 of each valve from remaining in the valve closed position within the second range W₂. The above determination method is applicable to the case where each valve is configured to be other types.

Specifically, regardless of the type or configuration of each valve, in the case where the electrical signal L is not detected by the electrical signal detector 200 when the phase angle indicating the position of the piston 22 is within the first range W₁ including the target phase angle A₄, the control mode for controlling each valve to be in the de-energized state may be executed and the operation state of each valve may be determined based on whether or not the electrical signal L is detected by the electrical signal detector 200 during execution of the control mode. In this case, the above-described second range W₂ may be set to be at least in part a range excluding the first range in accordance with the valve type and specific configuration of each valve. For instance, in the embodiment illustrated in FIG.6, the second range W₂ may be the range the piston 22 moves from the top dead center toward the bottom dead center.

Further, the same principle as the above-described determination method can be established for the hydraulic pump 8 and thus, the determination method and improvement method that are described above using the hydraulic motor 10 as an example are also applicable to the hydraulic pump 8. In this case, the pump controller constituting a part of the power generating apparatus controller 500 may be configured to control the high pressure valve and/or the low pressure valve of the hydraulic pump 8 by the above determination method and improvement method.

### (Measures taken beforehand to suppress occurrence of abnormalities in the high pressure valve and the low pressure valve)

Next, the measures taken before to suppress occurrence of abnormalities in the high pressure valve 28 and the low pressure valve 30 are described.

The lower the temperature of the operating oil introduced to the hydraulic chamber 24 is, the higher the viscosity of the operating oil becomes. Due to high viscous resistance of the operating oil, it takes longer to operate the high pressure valve 28. As a result, the timing A3 for switching the high pressure valve 28 from the open state to the closed state (see FIG.6) is delayed, and the above-described first event might occur.

Likewise for the low pressure valve 30, the lower the temperature of the operating oil introduced to the hydraulic chamber 24 is, the higher the viscosity of the operating oil becomes. Due to high viscous resistance of the operating oil, it takes longer to move the movable unit 52 of the low pressure valve 30 from the valve open position to the valve closed position. As a result, the timing A₁ (see FIG.6) for moving the movable unit 52 from the valve open position to the valve closed position is delayed, and the above-described second event might occur.

Therefore, in some embodiments, as illustrated in FIG.8A, the motor controller 100 is configured to, in the case where the temperature T of the operating oil indicated by a temperature indicator 300 is lower than a reference temperature T₂, advance the transmission timing t₂ of transmitting the control signal 132A (see FIG.5 and FIG.6) and the transmission timing t₁ of transmitting the control signal 136A (see FIG.5 and FIG.6) to a timing earlier than the case where the temperature T of the operating oil is higher than the reference temperature T₂.

By advancing the transmission timing t₂ in this manner, it is possible to prevent delay in the timing A3 of switching the high pressure valve 28 from the open state to the closed state due to the temperature of the operating oil, and to avoid occurrence of the first event. Further, by advancing the transmission timing t₂, it is possible to avoid delay in the timing A₁, it is possible to prevent delay in the timing A₁ of moving the movable unit 52 from the valve open position to the valve closed position due to the operating oil temperature, and avoid occurrence of the second event.

In FIG.8A, the vertical axis t of the transmission timing t₁ is set such 0 is a time point when the piston passes through the top dead center is zero and thus, the transmission timing t₁ being before the top dead center as illustrated in FIG.6 has a negative value. Further, the vertical axis of the transmission timing t₂ is set such 0 is a time point when the piston passes through the bottom dead center is zero and thus, the transmission timing t₂ being before the bottom dead center as illustrated in FIG.6 has a negative value. As illustrated in FIG.8A, the transmission timing t₁ and the transmission timing t₂ are maintained constant when the operating oil temperature is above T₂ and when the operating oil temperature is below t₁. Further, the transmission timing t₁ and the transmission timing t₂ are controlled when the operating oil temperature is between T₁ and T₂, so that the lower the temperature, the earlier timing the timing is advanced to.

The temperature indicator 300 may constitute a part of the hydraulic motor 10 as explained in reference to FIG.2, or may be provided separately from the hydraulic motor 10 and constitute a part of the wind turbine generator 1 as illustrated in FIG.10 which is described later. As the temperature indicator 300, a thermometer configured to measure the temperature of the operating oil may be used, or an estimator configured to estimate the temperature of the operating oil from parameters such as torque, rotation speed, pressure of the operating oil in the hydraulic transmission may be used. In the case of using the estimator, the motor controller 100 or an arbitrary controller thereof may function as the estimator.

The rotation speed N of the hydraulic motor 10 detected by a rotation speed detector 400 (see FIG.10) may be used instead of the temperature T in FIG.8A. More specifically, the motor controller 100 may be configured to, in the case where the rotation speed N of the hydraulic motor 10 is lower than a reference rotation speed N2, advance the transmission timing t₂ of transmitting the control signal 132A and the transmission timing t₁ of transmitting the control signal 136A to a timing earlier than the case where the rotation speed N of the hydraulic motor 10 is higher than the reference rotation speed N2.

By advancing the transmission timing t₂ in this manner, it is possible to prevent delay in the timing A3 of switching the high pressure valve 28 from the open state to the closed state due to the temperature of the operating oil, and to avoid occurrence of the first event. Further, by advancing the transmission timing t₁, it is possible to avoid delay in the timing A₁ of moving the movable unit 52 from the valve open position to the valve closed position and avoid occurrence of the second event. Further, the rotation speed detector 400 may constitute a part of the hydraulic motor 10 as explained in reference to FIG.2, or may be provided separately from the hydraulic motor 10 and constitute a part of the wind turbine generator 1 as illustrated in FIG. 10 which is described later.

As illustrated in FIG.8B, the motor controller 100 is configured to, in the case where the rotation speed N of the hydraulic motor 10 detected by the rotation speed detector 400 is lower than the reference rotation speed N2, control the low pressure valve 30 so that the electrical current I applied to the solenoid 54 to move the movable unit 52 from the valve open position to the valve closed position is larger than the case where the rotation speed N of the hydraulic motor 10 is higher than the reference rotation speed N2.

As a result, by the large electromagnetic force generated by the solenoid 54, it is possible to smoothly move the movable unit 52 from the valve open position to the valve closed position to avoid occurrence of the second event.

The operating oil temperature T indicated by the temperature indicator 300 may be used instead of the rotation speed N in FIG.8B. More specifically, the motor controller 100 may be configured to, in the case the operating oil temperature T is lower than the reference temperature T₂, control the low pressure valve 30 so that the electrical current applied to the solenoid 54 to move the movable unit 52 from the valve open position to the valve closed position is larger than the case where the operating oil temperature T is higher than the reference temperature T₂.

As a result, by the large electromagnetic force generated by the solenoid 54, it is possible to smoothly move the movable unit 52 from the valve open position to the valve closed position to avoid occurrence of the second event.

In some embodiments, the power generating apparatus controller 500 (see FIG.10) may be configured to, in a case where a load of the hydraulic transmission 64 including the hydraulic pump 9 and the hydraulic motor 10 is not lower than a threshold value and the operating oil temperature T indicated by the temperature indicator 300 is below the reference temperature T₄, reduce a target flow rate of the hydraulic pump 8 which is determined in accordance with the operation state of the power generating apparatus 1, compared to the case where the operating oil temperature T is higher than the reference temperature T₄.

Further, the target flow rate of the hydraulic pump 8 is an optimum flow rate determined in accordance with the operation state of the wind turbine generator 1 to maximize the power generation efficiency of the wind turbine generator 1. As indicators of the operation state of the wind turbine generator 1, the rotation speed of the rotor 3, the pitch angle of the blade 2, the wind speed, etc, may be used, for instance.

In such a state that the load of the hydraulic transmission 64 is rather high (in such a state that the output is not less than 80% of the rated output), if the operating oil temperature is low, the flow rate of the hydraulic pump 8 becomes greater than the flow rate of the hydraulic motor 10, which causes imbalance between these two flow rates. Thus, even when the load of the hydraulic transmission 64 is not lower than a threshold value and the temperature T indicated by the temperature indicator 300 is lower than the reference temperature T₄, the target flow rate of the hydraulic pump 8 which is determined in accordance with the operation state of the wind turbine generator 1 is lowered compared to the case where the temperature T is higher than the reference temperature T₄ so as to operate the hydraulic transmission 64 in a stable manner.

FIG.8C is a graph showing a relationship between the operating oil temperature T indicated by the temperature indicator 300 and a scale factor SCF of a target flow rate of the hydraulic pump 8. As illustrated in FIG.8C, the scale factor SCF is controlled to be constant when the operating oil temperature is above T₄ and when the operating oil temperature is below T₃. Further, the scale factor SCF may be controlled when the operating oil temperature is between T₃ and T₄, so that the lower the temperature is, the smaller the scale factor is. In one embodiment, the scale factor SCF when the operation oil temperature is higher than T₄ is 1, and the scale factor SCF when the operating oil temperature is not higher than T₄ is not greater than 1.

In some embodiments, when starting the hydraulic motor 10, an auxiliary valve 70 may be used. The auxiliary valve 70 has a smaller cross-sectional flow area than the high pressure valve 28. In this case, as illustrated in FIG.9, the auxiliary valve 70 is arranged between the hydraulic chamber 24 and the high pressure line 12 to be parallel to the high pressure valve 28. The opening and closing operation of the auxiliary valve 70 is controlled by an AXV control signal 142 from the motor controller 100.

Even in the case of using the auxiliary valve 70 which is relatively easy to open and close in spite of a large pressure difference between the hydraulic chamber 24 and the high pressure line 12, the pressure difference between the hydraulic chamber 24 and the high pressure line 12 has some effect on the opening and closing timing of the auxiliary valve 70. Therefore, the motor controller 100 is configured to advance the transmission timing t₁ of transmitting the control single 136A to the low pressure valve 30, even in the case where the hydraulic motor 10 is started using the auxiliary valve 70 with smaller cross-sectional flow area than the high pressure valve 28, to a timing earlier than the case where the hydraulic motor 10 is started in the normal operation mode using the high pressure valve 28. As a result, it is possible to adjust the pressure in the hydraulic chamber 24 so as to open and close the auxiliary valve 70 at an appropriate timing. Therefore, it is possible to start the hydraulic motor 10 in a stable manner.

In some embodiments, the motor controller 100 is configured to, in the case where the hydraulic motor 10 cannot be started in the operation mode for rotating the rotation shaft 32 of the hydraulic motor 10 in a first direction (e.g. direction d₁ of FIG.2), start the hydraulic motor 10 in an operation mode for rotating the rotation shaft 32 in a second direction (e.g. direction d₂ of FIG.2) which is opposite to the first direction.

After keen examinations by the inventors of the present invention, it was discovered that, by starting the hydraulic motor 10 in the operation mode for rotating the rotation shaft 32 in the second direction which is opposite to the first direction when the hydraulic motor 10 could not be started in the operation mode for rotating the rotation shaft 32 of the hydraulic motor 10 in the first direction, it was possible to operate the high pressure valve 28 and the low pressure valve 32 normally and start the hydraulic motor 10.

As described above, as the hydraulic motor controller 100 is configured to, when the hydraulic motor 10 cannot be started in the operation mode for rotating the rotation shaft 32 of the hydraulic motor 10 in the first direction, start the hydraulic motor 10 in the operation mode for rotating the rotation shaft 32 in the second direction which is opposite to the first direction, the high pressure valve 28 and the low pressure valve 30 which cannot normally start by rotating the rotation shaft 32 of the hydraulic motor 10 in the first direction and the hydraulic motor 10 can be started to raise the operating oil temperature.

In the case of starting the hydraulic motor 10 using the auxiliary valve 70 in the above-described manner, the auxiliary valve 70 and the low pressure valve 30 may be controlled by the motor controller 100 so as to rotate the rotations shaft 32 of the hydraulic motor 10 in the second direction.

Further, in the case where the wind turbine generator 1 is provided with a service pump 72 (see FIG. 10) for maintenance which is connected to the high pressure line 13, when starting the hydraulic motor 10 in the operation mode for rotating the rotation shaft 32 of the hydraulic motor 10 in the second direction, the service pump 72 may be driven instead of the hydraulic pump 8. The service pump 72 is configured to supply the operating oil to the high pressure line from an oil tank 74 (see FIG.10). The service pump 72 may be provided as a hydraulic pressure source for motoring the hydraulic pump 8 temporarily when performing maintenance of the wind turbine generator 1.

In some embodiments, the power generating apparatus controller 500 is configured to execute an oil temperature raising mode for raising the operating oil temperature to suppress occurrence of the first event and the second event which occur due to the operating oil temperature being low as described above.

FIG.10 is a diagram showing a configuration example of the wind turbine generator 1 which is capable of executing the oil temperature raising mode.

The wind turbine generator 1 comprises a bypass line 80 which connects a midway of the high pressure line 12 and a midway of the low pressure line 14 and a relief valve 82 provided in the bypass line 80. The power generating apparatus controller 500 is configured to execute the oil temperature raising mode in which the hydraulic motor 10 is stopped while the hydraulic pump 8 is operated so that the operating oil flows into the low pressure line 14 from the high pressure line 12 via the relief valve 82.

By executing the oil temperature raising mode for stopping the hydraulic motor 10 while letting the hydraulic pump 8 continue to operate so that the operating oil flows into the low pressure line 14 from the high pressure line 12 via the relief valve 82, a part of pressure energy of the operating oil passes through the relief valve 82 and is converted into heat energy, thereby raising the temperature of the operating oil. Therefore, by executing the oil temperature raising mode, it is possible to improve the first event and the second event caused by the temperature of the operating oil being low, and it is possible to successfully operate the high pressure valve 28 and the low pressure valve 30. As a result, it is possible to successfully operate the hydraulic motor 10, thereby improving the power generation efficiency of the wind turbine generator 1.

In the case where the wind turbine generator 1 is provided with a boost pump 84 (see FIG.10) for maintaining the operating oil of the low pressure line 14 during the normal operation, it is preferable to stop this boost pump 84 in the execution of the oil temperature raising mode. The boost pump 84 is configured to supply oil to the low pressure line 14 from the oil tank 74.

### [Reference Signs list]

- 1: Wind turbine generator
- 2: Blade
- 3: Rotor
- 4: Hub
- 5: Hub cover
- 6: Rotation shaft
- 8: Hydraulic pump
- 10: Hydraulic motor
- 12: High pressure oil line
- 14: Low pressure oil line
- 16: Generator
- 18: Nacelle
- 19: Tower
- 20: Cylinder
- 22A: Piston body
- 22B: Piston roller
- 24: Hydraulic chamber
- 26: Cam
- 28: High pressure valve
- 30: Low pressure valve
- 32: Rotation shaft
- 34: High pressure communication line
- 36: Low pressure communication line
- 37: Casing
- 38: Valve unit
- 40: Movable unit
- 42: Solenoid coil
- 44: Spring
- 45: Valve seat
- 48: Valve element
- 50: Armature
- 52: Movable unit
- 54: Solenoid
- 56: Spring
- 58: Valve seat
- 60: Bypass line
- 62: Relief valve
- 70: Auxiliary valve
- 100: Motor controller
- 132: HPV control signal
- 134: High pressure valve position
- 136: LPV control signal
- 138: Low pressure valve position
- 140: Pressure curve
- 130: Piston cycle curve
- 200: Electrical signal detector
- 300: Temperature indicator
- 400: Rotation speed detector
- 500: Power generating apparatus controller

## Claims

1. A hydraulic machine comprising:
a cylinder (20);
a piston (22) slidably provided in the cylinder (20);
a first electromagnetic valve (30) comprising: a movable unit (52) including a valve element (48) and an armature (50); and a solenoid coil (54), the first electromagnetic valve (30) being configured to switch a state of communication between a hydraulic chamber (24) formed by the cylinder (20) and the piston (22) and an outside of the hydraulic chamber (24) by moving the movable unit (52);
a controller for moving the movable unit (52) to a first position by energizing the solenoid coil (54), the first position being one of a valve open position and a valve closed position; and
an electrical signal detector (200) for detecting an electrical signal which the solenoid coil (54) generates when the movable unit (52) moves from the first position to a second position in a state where the solenoid coil (54) is not energized, the second position being the other of the valve open position and the valve closed position,
**characterized in that** the controller is configured to, in a case where the electrical signal is not detected by the electrical signal detector (200) when a phase angle of the piston (22) indicating a position of the piston (22) in each cycle of a reciprocating motion of the piston (22) is in a first range (W₁) including a target phase angle (A₄) of the piston for moving the movable unit (52) to the second position:
execute a control mode for controlling the movable unit (52) to be in the second position by maintaining the solenoid coil (54) in the not energized state; and
determine an operation state of the first electromagnetic valve (30) based on whether or not the electrical signal is detected by the electrical signal detector (200) when the control mode is executed and the phase angle of the piston (22) is in a second range (W₂) which is at least a part of a range excluding the first range (W₁).

2. The hydraulic machine according to claim 1,
wherein the controller is configured to:
determine occurrence of a first event in a case where the electrical signal is detected when the control mode is executed and the phase angle of the piston (22) is in the second range (W₂) which is at least a part of a range excluding the first range (W₁), the first event indicating that the movable unit (52) has continued to be in the first position in a period corresponding to the first range (W₁); and
determine occurrence of a second event in a case where the electrical signal is not detected when the control mode is executed and the phase angle of the piston (22) is in the second range (W₂) which is at least a part of a range excluding the first range (W₁), the second event indicating that the movable unit (52) has continued to be in the second position in the period corresponding to the first range (W₁).

3. The hydraulic machine according to claim 2,
wherein the controller is configured to, in a case where occurrence of the second event is determined, advance a transmission timing of transmitting a control signal for moving the movable unit (52) from the second position to the first position in the reciprocating motion of the piston (22).

4. The hydraulic machine according to claim 2 or 3, further comprising:
a second electromagnetic valve configured to switch a state of communication between the hydraulic chamber (24) and the outside of the hydraulic chamber (24),
wherein the controller is configured to, in a case where occurrence of the first event is determined, advance a transmission timing of transmitting a control signal that is supplied to the second electromagnetic valve prior to a timing corresponding to the target phase angle so as to switch an open/close state of the second electromagnetic valve.

5. The hydraulic machine according to any one of claims 1 to 3, further comprising:
a high pressure valve (28) configured to switch a state of communication between the hydraulic chamber (24) and a high pressure line (12) provided outside the hydraulic chamber; and
a temperature indicator (300) for indicating a temperature of operating oil to be introduced to the hydraulic chamber (24),
wherein the first electromagnetic valve includes a low pressure valve (30) which is configured to switch a state of communication between the hydraulic chamber (24) and a low pressure line (14) provided outside the hydraulic chamber (24),
wherein the first position is the valve closed position and the second position is the valve open position, and
wherein the controller is configured to, in a case where the temperature of the operating oil indicated by the temperature indicator (300) is below a reference temperature, advance a transmission timing of transmitting a control signal for moving the movable unit (52) from the valve open position to the valve closed position in a reciprocating motion of the piston (22) to a timing earlier than a case where the temperature of the operating oil indicated by the temperature indicator (300) exceeds the reference temperature.

6. The hydraulic machine according to claim 5,
wherein the controller is configured to, in the case where the temperature of the operating oil indicated by the temperature indicator (300) is below the reference temperature, advance a transmission timing of transmitting a control signal that is supplied to the high pressure valve (28) prior to the timing corresponding to the target phase angle so as to switch an open/close state of the high pressure valve, to a timing earlier than the case where the temperature of the operating oil indicated by the temperature indicator (300) exceeds the reference temperature.

7. The hydraulic machine according to any one of claims 1 to 3, further comprising:
a high pressure valve (28) configured to switch a state of communication between the hydraulic chamber (24) and a high pressure line (12) provided outside the hydraulic chamber (24); and
a temperature indicator (300) for indicating a temperature of operating oil to be introduced to the hydraulic chamber (24),
wherein the first electromagnetic valve includes a low pressure valve (30) which is configured to switch a state of communication between the hydraulic chamber (24) and a low pressure line (14) provided outside the hydraulic chamber (24),
wherein the first position is the valve closed position and the second position is the valve open position, and
wherein the controller is configured to, in a case where the temperature of the operating oil indicated by the temperature indicator (300) is below a reference temperature, control the low pressure valve (30) so as to increase an electric current that is applied to the solenoid coil (54) to move the movable unit (52) from the valve open position to the valve closed position compared to a case where the temperature of the operating oil indicated by the temperature indicator (300) exceeds the reference temperature.

8. The hydraulic machine according to any one of claims 1 to 3, further comprising:
a high pressure valve (28) configured to switch a state of communication between the hydraulic chamber (24) and a high pressure line (12) provided outside the hydraulic chamber (24);
wherein the first electromagnetic valve includes a low pressure valve (30) which is configured to switch a state of communication between the hydraulic chamber (24) and a low pressure line (14) provided outside the hydraulic chamber (24),
wherein the first position is the valve closed position and the second position is the valve open position, and
wherein the controller is configured to, in a case where a rotation speed of the hydraulic machine is lower than a reference rotation speed, control the low pressure valve (30) so as to increase an electric current that is applied to the solenoid coil (54) to move the movable unit (52) from the valve open position to the valve closed position compared to a case where the rotation speed of the hydraulic machine exceeds the reference rotation speed.

9. The hydraulic machine according to any one of claims 1 to 3, further comprising:
a high pressure valve (28) configured to switch a state of communication between the hydraulic chamber (24) and a high pressure line (12) provided outside the hydraulic chamber (24); and
an auxiliary valve (70) for supplying high pressure oil to the hydraulic machine when starting the hydraulic machine,
wherein the first electromagnetic valve includes a low pressure valve (30) which is configured to switch a state of communication between the hydraulic chamber (24) and a low pressure line provided outside the hydraulic chamber (24),
wherein the first position is the valve closed position and the second position is the valve open position, and
wherein the auxiliary valve (70) has a cross-sectional passage area smaller than that of the high pressure valve (28), and
wherein the controller is configured to, in a case where the hydraulic machine is started using the auxiliary valve (70), advance a transmission timing of transmitting a control signal for moving the movable unit (52) from the valve open position to the valve closed position in the reciprocating motion of the piston (22) compared to a case where the hydraulic machine is driven in a normal operation mode using the high pressure valve (28).

10. The hydraulic machine according to any one of claims 1 to 3,
wherein the controller is configured to, in a case where the hydraulic machine fails to be driven in an operation mode for rotating a rotation shaft (6) of the hydraulic machine in a first direction, start the hydraulic machine in an operation mode for rotating the rotation shaft (6) in a second direction which is opposite to the first direction.

11. A power generating apparatus for generating electric power from renewable energy, comprising:
a main shaft configured to rotate using the renewable energy;
a hydraulic pump (8) configured to be driven by rotation of the main shaft;
a hydraulic motor (10) configured to be driven by pressurized oil generated by the hydraulic pump (8); and
a generator (16) configured to be driven by the hydraulic motor (10);
wherein the hydraulic motor (10) or the hydraulic pump comprises:
a cylinder (20);
a piston (22) slidably provided in the cylinder (20);
an electromagnetic valve comprising: a movable unit (52) including a valve element (48) and an armature (50); and a solenoid coil (54), the electromagnetic valve being configured to switch a state of communication between a hydraulic chamber (24) formed by the cylinder (20) and the piston (22) and an outside of the hydraulic chamber (24) by moving the movable unit (52);
a controller for moving the movable unit (52) to a first position by energizing the solenoid coil, (54) the first position being one of a valve open position and a valve closed position; and
an electrical signal detector (200) for detecting an electrical signal which the solenoid coil (54) generates when the movable unit (52) moves from the first position to a second position in a state where the solenoid coil (54) is not energized, the second position being the other of the valve open position and the valve closed position, and
**characterized in that** the controller is configured to, in a case where the electrical signal is not detected by the electrical signal detector (200) when a phase angle of the piston (22) indicating a position of the piston (22) in each cycle of a reciprocating motion of the piston (22) is in a first range (W₁) including a target phase angle (A₄) of the piston (22) for moving the movable unit (52) to the second position: execute a control mode for controlling the movable unit (52) to be in the second position by maintaining the solenoid coil (54) in the not energized state; and
determine an operation state of the electromagnetic valve based on whether or not the electrical signal is detected by the electrical signal detector (200) when the control mode is executed and the phase angle of the piston (22) is in a second range (W₂) which is at least a part of a range excluding the first range (W₁).

12. The power generating apparatus according to claim 11, further comprising:
a high pressure line (12) for connecting an outlet of the hydraulic pump (8) and an inlet of the hydraulic motor (10);
a low pressure line (14) for connecting an inlet of the hydraulic pump (8) and an outlet of the hydraulic motor (10);
a bypass line (60) for connecting a point on the high pressure line (12) and a point on the low pressure line (14); and
a relief valve (62) provided on the bypass line (60),
wherein the controller is configured to execute an oil temperature raising mode while operating the hydraulic pump (8) so that operating oil flows from the high pressure oil line (12) to the low pressure line via the relief valve (62).

13. The power generating apparatus according to claim 11 or 12, further comprising:
a temperature indicator (300) for indicating a temperature of operating oil to be introduced to the hydraulic chamber (24),
wherein the controller is configured to, in a case where a load of the hydraulic transmission including the hydraulic pump (8) and the hydraulic motor (10) is not less than a threshold value and the temperature of the operating oil indicated by the temperature indicator is below a reference temperature, reduce a target flow rate of the hydraulic pump (8) which is determined in accordance with an operation state of the power generating apparatus compared to a case where the temperature of the operating oil indicated by the temperature indicator (300) exceeds the reference temperature.

14. The power generating apparatus according to any one of claims 11 to 13,
wherein the power generating apparatus is a wind turbine generator (1) which is configured to generate electric power from wind in a form of renewable energy.

## Patentansprüche

1. Hydraulikmaschine, umfassend:
einen Zylinder (20),
einen Kolben (22), der gleitfähig in dem Zylinder (20) angeordnet ist,
ein erstes elektromagnetisches Ventil (30), umfassend: eine bewegliche Einheit (52), die ein Ventilelement (48) und einen Anker (50) enthält, und eine Solenoidspule (54), wobei das erste elektromagnetische Ventil (30) dafür konfiguriert ist, einen Strömungsverbindungszustand zwischen einer Hydraulikkammer (24), die durch den Zylinder (20) und den Kolben (22) gebildet wird, und einer Außenseite der Hydraulikkammer (24) durch Bewegen der beweglichen Einheit (52) umzuschalten,
eine Steuereinheit zum Bewegen der beweglichen Einheit (52) in eine erste Position durch Energiebeaufschlagung der Solenoidspule (54), wobei die erste Position eine Ventil-offen-Position oder eine Ventil-geschlossen-Position ist, und
einen Elektrisches-Signal-Detektor (200) zum Detektieren eines elektrischen Signals, das die Solenoidspule (54) generiert, wenn sich die bewegliche Einheit (52) von der ersten Position zu einer zweiten Position in einer Zustand bewegt, wo die Solenoidspule (54) nicht mit Energie beaufschlagt ist, wobei die zweite Position die andere der Ventil-offen-Position bzw. der Ventil-geschlossen-Position ist,
**dadurch gekennzeichnet, dass** die Steuereinheit in einem Fall, wo das elektrische Signal nicht durch den Elektrisches-Signal-Detektor (200) detektiert wird, wenn ein Phasenwinkel des Kolbens (22), der eine Position des Kolbens (22) in jedem Zyklus einer Hubbewegung des Kolbens (22) anzeigt, in einem ersten Bereich (W₁) ist, der einen Zielphasenwinkel (A₄) des Kolbens zum Bewegen der beweglichen Einheit (52) in die zweite Position enthält, konfiguriert ist zum:
Ausführen eines Steuerungsmodus zum Steuern der beweglichen Einheit (52), um sie in die zweite Position zu bringen, indem die Solenoidspule (54) in dem nicht mit Energie beaufschlagten Zustand gehalten wird, und
Bestimmen eines Betriebszustands des ersten elektromagnetischen Ventils (30) anhand dessen, ob das elektrische Signal durch den Elektrisches-Signal-Detektor (200) detektiert wird oder nicht, wenn der Steuerungsmodus ausgeführt wird und der Phasenwinkel des Kolbens (22) in einem zweiten Bereich (W₂) liegt, der mindestens ein Teil eines Bereichs ist, der den ersten Bereich (W₁) ausschließt.

2. Hydraulikmaschine nach Anspruch 1,
wobei die Steuereinheit konfiguriert ist zum:
Bestimmen des Eintretens eines ersten Ereignisses in einem Fall, wo das elektrische Signal detektiert wird, wenn der Steuerungsmodus ausgeführt wird und der Phasenwinkel des Kolbens (22) in dem zweiten Bereich (W₂) liegt, der mindestens ein Teil eines Bereichs ist, der den ersten Bereich (W₁) ausschließt, wobei das erste Ereignis anzeigt, dass die bewegliche Einheit (52) in einem Zeitraum, der dem ersten Bereich (W₁) entspricht, weiterhin in der ersten Position geblieben ist, und
Bestimmen des Eintretens eines zweiten Ereignisses in einem Fall, wo das elektrische Signal nicht detektiert wird, wenn der Steuerungsmodus ausgeführt wird und der Phasenwinkel des Kolbens (22) in dem zweiten Bereich (W₂) liegt, der mindestens ein Teil eines Bereichs ist, der den ersten Bereich (W₁) ausschließt, wobei das zweite Ereignis anzeigt, dass die bewegliche Einheit (52) in dem Zeitraum, der dem ersten Bereich (W₁) entspricht, weiterhin in der zweiten Position geblieben ist.

3. Hydraulikmaschine nach Anspruch 2,
wobei die Steuereinheit dafür konfiguriert ist, in einem Fall, wo das Eintreten des zweiten Ereignisses bestimmt wird, einen Sendezeitpunkt zum Senden eines Steuerungssignals zum Bewegen der beweglichen Einheit (52) aus der zweiten Position in die erste Position in der Hubbewegung des Kolbens (22) auf einen früheren Zeitpunkt zu verlegen.

4. Hydraulikmaschine nach Anspruch 2 oder 3, ferner umfassend:
ein zweites elektromagnetisches Ventil, das dafür konfiguriert, einen Strömungsverbindungszustand zwischen der Hydraulikkammer (24) und der Außenseite der Hydraulikkammer (24) umzuschalten,
wobei die Steuereinheit dafür konfiguriert ist, in einem Fall, wo das Eintreten des ersten Ereignisses bestimmt wird, einen Sendezeitpunkt zum Senden eines Steuerungssignals, das vor einem Zeitpunkt, der dem Zielphasenwinkel entspricht, an das zweite elektromagnetische Ventil übertragen wird, um einen Offen/Geschlossen-Zustand des zweiten elektromagnetisches Ventils umzuschalten, auf einen früheren Zeitpunkt zu verlegen.

5. Hydraulikmaschine nach einem der Ansprüche 1 bis 3, ferner umfassend:
ein Hochdruckventil (28), das dafür konfiguriert ist, einen Strömungsverbindungszustand zwischen der Hydraulikkammer (24) und einer Hochdruckleitung (12), die auf einer Außenseite der Hydraulikkammer angeordnet ist, umzuschalten, und
einen Temperaturanzeiger (300) zum Anzeigen einer Temperatur von Arbeitsöl, das in die Hydraulikkammer (24) eingeleitet werden soll,
wobei das erste elektromagnetische Ventil ein Niederdruckventil (30) enthält, das dafür konfiguriert ist, einen Strömungsverbindungszustand zwischen der Hydraulikkammer (24) und einer Niederdruckleitung (14), die auf einer Außenseite der Hydraulikkammer (24) angeordnet ist, umzuschalten,
wobei die erste Position die Ventil-geschlossen-Position ist und die zweite Position die Ventil-offen-Position ist, und
wobei die Steuereinheit dafür konfiguriert ist, in einem Fall, wo die durch den Temperaturanzeiger (300) angezeigte Temperatur des Arbeitsöls unter einer Referenztemperatur liegt, einen Sendezeitpunkt zum Senden eines Steuerungssignals zum Bewegen der beweglichen Einheit (52) von der Ventil-offen-Position zu der Ventilgeschlossen-Position in einer Hubbewegung des Kolbens (22) auf einen früheren Zeitpunkt zu verlegen als in einem Fall, wo die durch den Temperaturanzeiger (300) angezeigte Temperatur des Arbeitsöls die Referenztemperatur übersteigt.

6. Hydraulikmaschine nach Anspruch 5,
wobei die Steuereinheit dafür konfiguriert ist, in dem Fall, wo die durch den Temperaturanzeiger (300) angezeigte Temperatur des Arbeitsöls unter der Referenztemperatur liegt, einen Sendezeitpunkt zum Senden eines Steuerungssignals, das vor dem Zeitpunkt, der dem Zielphasenwinkel entspricht, an das Hochdruckventil (28) übermittelt wird, um einen Offen/Geschlossen-Zustand des Hochdruckventils umzuschalten, auf einen früheren Zeitpunkt zu verlegen als in dem Fall, wo die durch den Temperaturanzeiger (300) angezeigte Temperatur des Arbeitsöls die Referenztemperatur übersteigt.

7. Hydraulikmaschine nach einem der Ansprüche 1 bis 3, ferner umfassend:
ein Hochdruckventil (28), das dafür konfiguriert ist, einen Strömungsverbindungszustand zwischen der Hydraulikkammer (24) und einer Hochdruckleitung (12), die auf einer Außenseite der Hydraulikkammer (24) angeordnet ist, umzuschalten, und
einen Temperaturanzeiger (300) zum Anzeigen einer Temperatur von Arbeitsöl, das in die Hydraulikkammer (24) eingeleitet werden soll,
wobei das erste elektromagnetische Ventil ein Niederdruckventil (30) enthält, das dafür konfiguriert ist, einen Strömungsverbindungszustand zwischen der Hydraulikkammer (24) und einer Niederdruckleitung (14), die auf einer Außenseite der Hydraulikkammer (24) angeordnet ist, umzuschalten,
wobei die erste Position die Ventil-geschlossen-Position ist und die zweite Position die Ventil-offen-Position ist, und
wobei die Steuereinheit dafür konfiguriert ist, in einem Fall, wo die durch den Temperaturanzeiger (300) angezeigte Temperatur des Arbeitsöls unter einer Referenztemperatur liegt, das Niederdruckventil (30) so zu steuern, dass ein elektrischer Strom, der an die Solenoidspule (54) angelegt wird, erhöht wird, um die bewegliche Einheit (52) aus der Ventil-offen-Position in die Ventil-geschlossen-Position zu bewegen, im Vergleich zu einem Fall, wo die durch den Temperaturanzeiger (300) angezeigte Temperatur des Arbeitsöls die Referenztemperatur übersteigt.

8. Hydraulikmaschine nach einem der Ansprüche 1 bis 3, ferner umfassend:
ein Hochdruckventil (28), das dafür konfiguriert ist, einen Strömungsverbindungszustand zwischen der Hydraulikkammer (24) und einer Hochdruckleitung (12), die auf einer Außenseite der Hydraulikkammer (24) angeordnet ist, umzuschalten,
wobei das erste elektromagnetische Ventil ein Niederdruckventil (30) enthält, die dafür konfiguriert ist, einen Strömungsverbindungszustand zwischen der Hydraulikkammer (24) und einer Niederdruckleitung (14), die auf einer Außenseite der Hydraulikkammer (24) angeordnet ist, umzuschalten,
wobei die erste Position die Ventil-geschlossen-Position ist und die zweite Position die Ventil-offen-Position ist, und
wobei die Steuereinheit dafür konfiguriert ist, in einem Fall, wo eine Drehzahl der Hydraulikmaschine kleiner ist als eine Referenzdrehzahl, das Niederdruckventil (30) so zu steuern, dass ein elektrischer Strom, der an die Solenoidspule (54) angelegt wird, erhöht wird, um die bewegliche Einheit (52) aus der Ventil-offen-Position in die Ventil-geschlossen-Position zu bewegen, im Vergleich zu einem Fall, wo die Drehzahl der Hydraulikmaschine die Referenzdrehzahl übersteigt.

9. Hydraulikmaschine nach einem der Ansprüche 1 bis 3, ferner umfassend:
ein Hochdruckventil (28), das dafür konfiguriert ist, einen Strömungsverbindungszustand zwischen der Hydraulikkammer (24) und einer Hochdruckleitung (12), die auf einer Außenseite der Hydraulikkammer (24) angeordnet ist, umzuschalten, und
ein Hilfsventil (70) zum Zuführen von Hochdrucköl zu der Hydraulikmaschine, wenn die Hydraulikmaschine gestartet wird,
wobei das erste elektromagnetische Ventil ein Niederdruckventil (30) enthält, das dafür konfiguriert ist, einen Strömungsverbindungszustand zwischen der Hydraulikkammer (24) und einer Niederdruckleitung, die auf einer Außenseite der Hydraulikkammer (24) angeordnet ist, umzuschalten,
wobei die erste Position die Ventil-geschlossen-Position ist und die zweite Position die Ventil-offen-Position ist, und
wobei das Hilfsventil (70) eine Querschnittsdurchgangsfläche hat, die kleiner als die des Hochdruckventils (28) ist, und
wobei die Steuereinheit dafür konfiguriert ist, in einem Fall, wo die Hydraulikmaschine mittels des Hilfsventils (70) gestartet wird, einen Sendezeitpunkt zum Senden eines Steuerungssignals zum Bewegen der beweglichen Einheit (52) aus der Ventil-offen-Position in die Ventil-geschlossen-Position in der Hubbewegung des Kolbens (22) auf einen früheren Zeitpunkt zu verlegen als in einem Fall, wo die Hydraulikmaschine in einem normalen Betriebsmodus mittels des Hochdruckventils (28) angetrieben wird.

10. Hydraulikmaschine nach einem der Ansprüche 1 bis 3,
wobei die Steuereinheit dafür konfiguriert ist, in einem Fall, wo die Hydraulikmaschine nicht in einem Betriebsmodus zum Drehen einer Drehwelle (6) der Hydraulikmaschine in einer ersten Richtung angetrieben wird, die Hydraulikmaschine in einem Betriebsmodus zum Drehen der Drehwelle (6) in einer zweiten Richtung, die der ersten Richtung entgegengesetzt ist, zu starten.

11. Stromerzeugungsvorrichtung zum Erzeugen von elektrischem Strom aus erneuerbarer Energie, umfassend:
eine Hauptwelle, die dafür konfiguriert ist, sich unter der Einwirkung erneuerbarer Energie zu drehen,
eine Hydraulikpumpe (8), die dafür konfiguriert ist, durch die Rotation der Hauptwelle angetrieben zu werden,
einen Hydraulikmotor (10), der dafür konfiguriert ist, durch druckbeaufschlagtes Öl, das durch die Hydraulikpumpe (8) erzeugt wird, angetrieben zu werden, und
einen Generator (16), der dafür konfiguriert ist, durch den Hydraulikmotor (10) angetrieben zu werden,
wobei der Hydraulikmotor (10) oder die Hydraulikpumpe umfasst:
- einen Zylinder (20),
- einen Kolben (22), der gleitfähig in dem Zylinder (20) angeordnet ist,
- ein erstes elektromagnetisches Ventil, umfassend: eine bewegliche Einheit (52), die ein Ventilelement (48) und einen Anker (50) enthält, und eine Solenoidspule (54), wobei das erste elektromagnetische Ventil dafür konfiguriert ist, einen Strömungsverbindungszustand zwischen einer Hydraulikkammer (24), die durch den Zylinder (20) und den Kolben (22) gebildet wird, und einer Außenseite der Hydraulikkammer (24) durch Bewegen der beweglichen Einheit (52) umzuschalten,
- eine Steuereinheit zum Bewegen der beweglichen Einheit (52) in eine erste Position durch Energiebeaufschlagung der Solenoidspule (54), wobei die erste Position eine Ventil-offen-Position oder eine Ventil-geschlossen-Position ist, und
- einen Elektrisches-Signal-Detektor (200) zum Detektieren eines elektrischen Signals, das die Solenoidspule (54) generiert, wenn sich die bewegliche Einheit (52) von der ersten Position zu einer zweiten Position in einer Zustand bewegt, wo die Solenoidspule (54) nicht mit Energie beaufschlagt ist, wobei die zweite Position die andere der Ventil-offen-Position bzw. der Ventil-geschlossen-Position ist,
**dadurch gekennzeichnet, dass** die Steuereinheit in einem Fall, wo das elektrische Signal nicht durch den Elektrisches-Signal-Detektor (200) detektiert wird, wenn ein Phasenwinkel des Kolbens (22), der eine Position des Kolbens (22) in jedem Zyklus einer Hubbewegung des Kolbens (22) anzeigt, in einem ersten Bereich (W₁) ist, der einen Zielphasenwinkel (A₄) des Kolbens zum Bewegen der beweglichen Einheit (52) in die zweite Position enthält, konfiguriert ist zum Ausführen eines Steuerungsmodus zum Steuern der beweglichen Einheit (52), um sie in die zweite Position zu bringen, indem die Solenoidspule (54) in dem nicht mit Energie beaufschlagten Zustand gehalten wird, und
Bestimmen eines Betriebszustands des ersten elektromagnetischen Ventils anhand dessen, ob das elektrische Signal durch den Elektrisches-Signal-Detektor (200) detektiert wird oder nicht, wenn der Steuerungsmodus ausgeführt wird und der Phasenwinkel des Kolbens (22) in einem zweiten Bereich (W₂) liegt, der mindestens ein Teil eines Bereichs ist, der den ersten Bereich (W₁) ausschließt.

12. Stromerzeugungsvorrichtung nach Anspruch 11, ferner umfassend:
eine Hochdruckleitung (12) zum Verbinden eines Auslasses der Hydraulikpumpe (8) mit einem Einlass des Hydraulikmotors (10),
eine Niederdruckleitung (14) zum Verbinden eines Einlasses der Hydraulikpumpe (8) mit einem Auslass des Hydraulikmotors (10),
eine Umgehungsleitung (60) zum Verbinden eines Punktes in der Hochdruckleitung (12) mit einem Punkt in der Niederdruckleitung (14), und
ein Entlastungsventil (62), das in der Umgehungsleitung (60) angeordnet ist,
wobei die Steuereinheit dafür konfiguriert ist, einen Öltemperaturanstiegsmodus auszuführen, während die Hydraulikpumpe (8) so betrieben wird, dass Arbeitsöl von der Hochdruckölleitung (12) über das Entlastungsventil (62) zu der Niederdruckleitung fließt.

13. Stromerzeugungsvorrichtung nach Anspruch 11 oder 12, ferner umfassend:
einen Temperaturanzeiger (300) zum Anzeigen einer Temperatur von Arbeitsöl, das in die Hydraulikkammer (24) eingeleitet werden soll,
wobei die Steuereinheit dafür konfiguriert ist, in einem Fall, wo eine Last der hydraulischen Kraftübertragung, die die Hydraulikpumpe (8) und den Hydraulikmotor (10) enthält, nicht kleiner als ein Schwellenwert ist und die durch den Temperaturanzeiger angezeigte Temperatur des Arbeitsöls unter einer Referenztemperatur liegt, eine Sollflussrate der Hydraulikpumpe (8), die gemäß einem Betriebszustand der Stromerzeugungsvorrichtung bestimmt wird, zu reduzieren, im Vergleich zu einem Fall, wo die durch den Temperaturanzeiger (300) angezeigte Temperatur des Arbeitsöls die Referenztemperatur übersteigt.

14. Stromerzeugungsvorrichtung nach einem der Ansprüche 11 bis 13,
wobei die Stromerzeugungsvorrichtung ein Windturbinengenerator (I) ist, der dafür konfiguriert ist, elektrischen Strom aus Wind als einer Form von erneuerbarer Energie zu erzeugen.

## Revendications

1. Machine hydraulique comportant :
un cylindre (20) ;
un piston (22) prévu de façon coulissante dans le cylindre (20) ;
une première électrovanne (30) comportant : une unité mobile (52) comprenant un élément de soupape (48) et un induit (50) ; et une bobine de solénoïde (54), la première électrovanne (30) étant configurée pour commuter un état de communication entre une chambre hydraulique (24) formée par le cylindre (20) et le piston (22) et un extérieur de la chambre hydraulique (24) en déplaçant l'unité mobile (52) ;
un dispositif de commande destiné à déplacer l'unité mobile (52) jusqu'à une première position en activant la bobine de solénoïde (54), la première position étant une d'une position d'ouverture de soupape et d'une position de fermeture de soupape ; et
un détecteur de signal électrique (200) destiné à détecter un signal électrique que la bobine de solénoïde (54) génère quand l'unité mobile (52) se déplace depuis la première position jusqu'à une deuxième position dans un état où la bobine de solénoïde (54) n'est pas activée, la deuxième position étant l'autre de la position d'ouverture de soupape et de la position de fermeture de soupape,
**caractérisée en ce que** le dispositif de commande est configuré pour, dans un cas où le signal électrique n'est pas détecté par le détecteur de signal électrique (200) quand un angle de phase du piston (22) indiquant une position du piston (22) dans chaque cycle d'un mouvement de va-et-vient du piston (22) est dans une première plage (W₁) comprenant un angle de phase cible (A₄) du piston destiné à déplacer l'unité mobile (52) jusqu'à la deuxième position :
exécuter un mode de commande destiné à commander l'unité mobile (52) pour être dans la deuxième position en maintenant la bobine de solénoïde (54) dans l'état non activé ; et
déterminer un état de fonctionnement de la première électrovanne (30) sur la base du fait que le signal électrique est détecté ou non par le détecteur de signal électrique (200) quand le mode de commande est exécuté et
l'angle de phase du piston (22) est dans une deuxième plage (W₂) qui est au moins une partie d'une plage excluant la première plage (W₁).

2. Machine hydraulique selon la revendication 1, dans laquelle le dispositif de commande est configuré pour :
déterminer l'apparition d'un premier événement dans un cas où le signal électrique est détecté quand le mode de commande est exécuté et l'angle de phase du piston (22) est dans la deuxième plage (W₂) qui est au moins une partie d'une plage excluant la première plage (W₁), le premier événement indiquant que l'unité mobile (52) a continué à être dans la première position dans une période correspondant à la première plage (W₁) ; et
déterminer l'apparition d'un deuxième événement dans un cas où le signal électrique n'est pas détecté quand le mode de commande est exécuté et l'angle de phase du piston (22) est dans la deuxième plage (W₂) qui est au moins une partie d'une plage excluant la première plage (W₁), le deuxième événement indiquant que l'unité mobile (52) a continué à être dans la deuxième position pendant la période correspondant à la première plage (W₁).

3. Machine hydraulique selon la revendication 2, dans laquelle le dispositif de commande est configuré pour, dans un cas où l'apparition du deuxième événement est déterminée, avancer un calage de transmission pour transmettre un signal de commande afin de déplacer l'unité mobile (52) depuis la deuxième position jusqu'à la première position dans le mouvement de va-et-vient du piston (22).

4. Machine hydraulique selon la revendication 2 ou 3, comportant en outre :
une deuxième électrovanne configurée pour commuter un état de communication entre la chambre hydraulique (24) et l'extérieur de la chambre hydraulique (24),
dans laquelle le dispositif de commande est configuré pour, dans un cas où l'apparition du premier événement est déterminée, avancer un calage de transmission pour transmettre un signal de commande qui est délivré à la deuxième électrovanne avant un calage correspondant à l'angle de phase cible de façon à commuter un état d'ouverture/fermeture de la deuxième électrovanne.

5. Machine hydraulique selon l'une quelconque des revendications 1 à 3, comportant en outre :
une soupape à haute pression (28) configurée pour commuter un état de communication entre la chambre hydraulique (24) et une conduite à haute pression (12) prévue à l'extérieur de la chambre hydraulique ; et
un indicateur de température (300) destiné à indiquer une température d'huile de fonctionnement devant être introduite dans la chambre hydraulique (24),
dans laquelle la première électrovanne comprend une soupape à basse pression (30) qui est configurée pour commuter un état de communication entre la chambre hydraulique (24) et une conduite à basse pression (14) prévue à l'extérieur de la chambre hydraulique (24),
dans laquelle la première position est la position de fermeture de soupape et la deuxième position est la position d'ouverture de soupape, et
dans laquelle le dispositif de commande est configuré pour, dans un cas où la température de l'huile de fonctionnement indiquée par l'indicateur de température (300) est en-dessous d'une température de référence, avancer un calage de transmission pour transmettre un signal de commande afin de déplacer l'unité mobile (52) depuis la position d'ouverture de soupape jusqu'à la position de fermeture de soupape dans un mouvement de va-et-vient du piston (22) à un calage plus tôt qu'un cas où la température de l'huile de fonctionnement indiquée par l'indicateur de température (300) dépasse la température de référence.

6. Machine hydraulique selon la revendication 5, dans laquelle le dispositif de commande est configuré pour, dans le cas où la température de l'huile de fonctionnement indiquée par l'indicateur de température (300) est en-dessous de la température de référence, avancer un calage de transmission pour transmettre un signal de commande qui est délivré à la soupape à haute pression (28) avant le calage correspondant à l'angle de phase cible de façon à commuter un état ouvert/fermé de la soupape à haute pression, à un calage plus tôt que le cas où la température de l'huile de fonctionnement indiquée par l'indicateur de température (300) dépasse la température de référence.

7. Machine hydraulique selon l'une quelconque des revendications 1 à 3, comportant en outre :
une soupape à haute pression (28) configurée pour commuter un état de communication entre la chambre hydraulique (24) et une conduite à haute pression (12) prévue à l'extérieur de la chambre hydraulique (24) ; et
un indicateur de température (300) destiné à indiquer une température d'huile de fonctionnement devant être introduite dans la chambre hydraulique (24),
dans laquelle la première électrovanne comprend une soupape à basse pression (30) qui est configurée pour commuter un état de communication entre la chambre hydraulique (24) et une conduite à basse pression (14) prévue à l'extérieur de la chambre hydraulique (24), dans laquelle la première position est la position de fermeture de soupape et la deuxième position est la position d'ouverture de soupape, et
dans laquelle le dispositif de commande est configuré pour, dans un cas où la température de l'huile de fonctionnement indiquée par l'indicateur de température (300) est en-dessous d'une température de référence, commander la soupape à basse pression (30) de façon à augmenter un courant électrique qui est appliqué sur la bobine de solénoïde (54) pour déplacer l'unité mobile (52) depuis la position d'ouverture de soupape jusqu'à la position de fermeture de soupape comparé à un cas où la température de l'huile de fonctionnement indiquée par l'indicateur de température (300) dépasse la température de référence.

8. Machine hydraulique selon l'une quelconque des revendications 1 à 3, comportant en outre :
une soupape à haute pression (28) configurée pour commuter un état de communication entre la chambre hydraulique (24) et une conduite à haute pression (12) prévue à l'extérieur de la chambre hydraulique (24) ;
dans laquelle la première électrovanne comprend une soupape à basse pression (30) qui est configurée pour commuter un état de communication entre la chambre hydraulique (24) et une conduite à basse pression (14) prévue à l'extérieur de la chambre hydraulique (24),
dans laquelle la première position est la position de fermeture de soupape et la deuxième position est la position d'ouverture de soupape, et
dans laquelle le dispositif de commande est configuré pour, dans un cas où une vitesse de rotation de la machine hydraulique est inférieure à une vitesse de rotation de référence, commander la soupape à basse pression (30) de façon à augmenter un courant électrique qui est appliqué sur la bobine de solénoïde (54) pour déplacer l'unité mobile (52) depuis la position d'ouverture de soupape jusqu'à la position de fermeture de soupape comparé à un cas où la vitesse de rotation de la machine hydraulique dépasse la vitesse de rotation de référence.

9. Machine hydraulique selon l'une quelconque des revendications 1 à 3, comportant en outre :
une soupape à haute pression (28) configurée pour commuter un état de communication entre la chambre hydraulique (24) et une conduite à haute pression (12) prévue à l'extérieur de la chambre hydraulique (24) ; et
une soupape auxiliaire (70) destinée à délivrer de l'huile à haute pression à la machine hydraulique lors du démarrage de la machine hydraulique,
dans laquelle la première électrovanne comprend une soupape à basse pression (30) qui est configurée pour commuter un état de communication entre la chambre hydraulique (24) et
une conduite à basse pression prévue à l'extérieur de la chambre hydraulique (24),
dans laquelle la première position est la position de fermeture de soupape et la deuxième position est la position d'ouverture de soupape, et
dans laquelle la soupape auxiliaire (70) a une section de passage plus petite que celle de la soupape à haute pression (28) , et
dans laquelle le dispositif de commande est configuré pour, dans un cas où la machine hydraulique est démarrée en utilisant la soupape auxiliaire (70), avancer un calage de transmission pour transmettre un signal de commande afin de déplacer l'unité mobile (52) depuis la position d'ouverture de soupape jusqu'à la position de fermeture de soupape dans le mouvement de va-et-vient du piston (22) comparé à un cas où la machine hydraulique est entraînée dans un mode de fonctionnement normal utilisant la soupape à haute pression (28) .

10. Machine hydraulique selon l'une quelconque des revendications 1 à 3,
dans laquelle le dispositif de commande est configuré pour, dans un cas où la machine hydraulique n'arrive pas à être entraînée dans un mode de fonctionnement destiné à faire tourner un arbre de rotation (6) de la machine hydraulique dans un premier sens, démarrer la machine hydraulique dans un mode de fonctionnement destiné à faire tourner l'arbre de rotation (6) dans un deuxième sens qui est opposé au premier sens.

11. Appareil de génération d'énergie destiné à générer de l'énergie électrique à partir d'une énergie renouvelable, comportant :
un arbre principal configuré pour tourner en utilisant l'énergie renouvelable ;
une pompe hydraulique (8) configurée pour être entraînée par la rotation de l'arbre principal ;
un moteur hydraulique (10) configuré pour être entraîné par de l'huile sous pression générée par la pompe hydraulique (8) ; et
une génératrice (16) configurée pour être entraînée par le moteur hydraulique (10) ;
dans lequel le moteur hydraulique (10) ou la pompe hydraulique comporte :
un cylindre (20) ;
un piston (22) prévu de façon coulissante dans le cylindre (20) ;
une électrovanne comportant : une unité mobile (52) comprenant un élément de soupape (48) et un induit (50) ;
et une bobine de solénoïde (54), l'électrovanne étant configurée pour commuter un état de communication entre une chambre hydraulique (24) formée par le cylindre (20) et le piston (22) et un extérieur de la chambre hydraulique (24) en déplaçant l'unité mobile (52) ;
un dispositif de commande destiné à déplacer l'unité mobile (52) jusqu'à une première position en activant la bobine de solénoïde, (54) la première position étant une d'une position d'ouverture de soupape et d'une position de fermeture de soupape ; et
un détecteur de signal électrique (200) destiné à détecter un signal électrique que la bobine de solénoïde (54) génère quand l'unité mobile (52) se déplace depuis la première position jusqu'à une deuxième position dans un état où la bobine de solénoïde (54) n'est pas activée, la deuxième position étant l'autre de la position d'ouverture de soupape et de la position de fermeture de soupape, et
**caractérisé en ce que** le dispositif de commande est configuré pour, dans un cas où le signal électrique n'est pas détecté par le détecteur de signal électrique (200) quand un angle de phase du piston (22) indiquant une position du piston (22) dans chaque cycle d'un mouvement de va-et-vient du piston (22) est dans une première plage (W₁) comprenant un angle de phase cible (A₄) du piston (22) pour déplacer l'unité mobile (52) jusqu'à la deuxième position : exécuter un mode de commande destiné à commander l'unité mobile (52) pour être dans la deuxième position en maintenant la bobine de solénoïde (54) dans l'état non activé ; et
déterminer un état de fonctionnement de l'électrovanne sur la base du fait que le signal électrique est détecté ou non par le détecteur de signal électrique (200) quand le mode de commande est exécuté et l'angle de phase du piston (22) est dans une deuxième plage (W₂) qui est au moins une partie d'une plage excluant la première plage (W₁).

12. Appareil de génération d'énergie selon la revendication 11, comportant en outre :
une conduite à haute pression (12) destinée à relier une sortie de la pompe hydraulique (8) et une entrée du moteur hydraulique (10) ;
une conduite à basse pression (14) destinée à relier une entrée de la pompe hydraulique (8) et une sortie du moteur hydraulique (10) ;
une conduite de dérivation (60) destinée à relier un point sur la conduite à haute pression (12) et un point sur la conduite à basse pression (14) ; et
une soupape de décharge (62) prévue sur la conduite de dérivation (60),
dans lequel le dispositif de commande est configuré pour exécuter un mode d'élévation de température d'huile tout en faisant fonctionner la pompe hydraulique (8) de telle sorte que de l'huile de fonctionnement s'écoule depuis la conduite d'huile à haute pression (12) jusqu'à la conduite à basse pression en passant par la soupape de décharge (62).

13. Appareil de génération d'énergie selon la revendication 11 ou 12, comportant en outre :
un indicateur de température (300) destiné à indiquer une température d'huile de fonctionnement devant être introduite dans la chambre hydraulique (24),
dans lequel le dispositif de commande est configuré pour, dans un cas où une charge de la transmission hydraulique comprenant la pompe hydraulique (8) et le moteur hydraulique (10) n'est pas inférieure à une valeur de seuil et la température de l'huile de fonctionnement indiquée par l'indicateur de température est en-dessous d'une température de référence, réduire un débit cible de la pompe hydraulique (8) qui est déterminé en fonction d'un état de fonctionnement de l'appareil de génération d'énergie comparé à un cas où la température de l'huile de fonctionnement indiquée par l'indicateur de température (300) dépasse la température de référence.

14. Appareil de génération d'énergie selon l'une quelconque des revendications 11 à 13,
dans lequel l'appareil de génération d'énergie est une éolienne (1) qui est configurée pour générer de l'énergie électrique à partir du vent dans une forme d'énergie renouvelable.
